# FASCICULE DE BREVET EUROPEEN

(11) **EP 4 377 652 B1**
(45) Date de publication et mention de la délivrance du brevet: **04.11.2026**
(21) Numéro de dépôt: 22757984.4
(22) Date de dépôt: 29.07.2022
(51) Int. Cl.: G01L 9/00, G01L 19/00, G01D 5/353, G01K 11/3206, G01L 11/02

(54) **DISPOSITIF DE MESURE DE PRESSION HYDROSTATIQUE, NOTAMMENT ABSOLUE ET/OU DE TEMPÉRATURE ET PROCÉDÉ DE MESURE ASSOCIÉ**
VORRICHTUNG ZUR MESSUNG DES HYDROSTATISCHEN DRUCKS, INSBESONDERE DES ABSOLUTEN HYDROSTATISCHEN DRUCKS UND/ODER DER TEMPERATUR, UND ZUGEHÖRIGES MESSVERFAHREN
DEVICE FOR MEASURING HYDROSTATIC PRESSURE, IN PARTICULAR ABSOLUTE HYDROSTATIC PRESSURE AND/OR TEMPERATURE, AND ASSOCIATED MEASUREMENT METHOD

(30) Priorité: 29.07.2021 FR 2108268
(43) Date de publication de la demande: 05.06.2024
(73) Titulaire: Commissariat à l'Energie Atomique et aux Energies Alternatives, 75015 Paris (FR)
(72) Inventeur: MAURIN, Laurent, 91191 GIF-SUR-YVETTE CEDEX (FR)
(74) Mandataire: Santarelli
(86) Numéro de dépôt international: PCT/FR2022/051530
(87) Numéro de publication internationale: WO 2023/007104

(56) Documents cités:
- US-A1- 2018 172 536

## Description

### DOMAINE TECHNIQUE

La présente invention concerne un dispositif de mesure de pression hydrostatique, notamment absolue, et/ou de température et procédé de mesure associé.

L'invention s'applique au domaine de l'instrumentation, et plus précisément à la mesure d'une pression hydrostatique absolue d'un fluide.

### ÉTAT DE LA TECHNIQUE ANTÉRIEUR

Il existe, notamment dans des environnements subissant des contraintes importantes, tels que certains espaces (notamment les zones de combustion et de compression) des turbomachines et autres types de motorisation, un besoin de réaliser une mesure de pression hydrostatique ou de température qui soit décorrélée de respectivement la température ou de la pression hydrostatique.

Pour répondre à ce besoin, il est notamment connu du document US 5841131 d'utiliser une fibre optique fonctionnalisée avec un réseau de Bragg inscrit dans un cœur optique de la fibre optique. En conformité avec l'enseignement de ce document, la fibre optique est adaptée pour présenter des phénomènes de biréfringence, ceci au moyen du ménagement d'une gaine optique elliptique ou d'une paire d'inserts induisant de la biréfringence, et pour présenter une réponse en déformations mécaniques anisotrope à une pression hydrostatique, ceci au moyen de deux trous longitudinaux aménagés de part et d'autre du cœur optique.

Ainsi, lorsque la fibre optique est soumise à une pression hydrostatique, comme celle d'un espace à surveiller, les efforts, et donc les déformations mécaniques s'exerçant sur le réseau de Bragg, sont, en raison de ces deux trous longitudinaux, anisotropes, et il en résulte un décalage en longueur d'onde de résonnance, résultant de ces déformations mécaniques, distinct selon les deux directions de biréfringence. Or, si les déformations mécaniques liées à la pression hydrostatique s'exerçant sur le cœur optique de la fibre optique sont anisotropes, celles liées à la température sont quant à elles isotropes. De ce fait, à partir des deux mesures permises par la biréfringence et d'un étalonnage adapté, la fibre optique, telle que décrite par le document US 5841131, autorise une mesure de pression hydrostatique et/ou de température qui sont décolérées de respectivement la température et la pression.

Néanmoins, un tel dispositif de mesure ne donne pas entière satisfaction.

En effet, l'utilisation de la fibre optique, telle que décrite par le document US 5841131, est que les deux trous longitudinaux aménagés dans la fibre optique sont à l'origine de concentrations de contraintes qui ont pour conséquence une limitation de la gamme de pression hydrostatique accessible avec une telle fibre optique, notamment en ce qui concerne les hautes pressions hydrostatiques, et une sensibilité de la mesure qui n'est pas parfaitement contrôlée.

D'autre part, cette solution est sensible à des variations d'efforts longitudinaux externes additionnels, i.e. : autres que ceux exercés par la seule pression hydrostatique.

Il est également connu le document US2018/172536, décrivant un dispositif de capteur de pression. Toutefois, les mesures et les équations utilisées dans ce document ne sont valables que pour mesurer des déformations de surface.

Un but de l'invention est donc de proposer un dispositif de mesure de la variation de pression et/ou de température et qui soit adapté pour une gamme de pression et de température plus importante que celle des dispositifs de l'art antérieur, et dont la sensibilité de mesure est parfaitement prédictible.

### EXPOSÉ DE L'INVENTION

À cet effet, l'invention a pour objet un dispositif ainsi qu'un procédé de mesure d'une pression et/ou de température conformément aux revendications annexées.

En particulier, le dispositif de mesure, comporte une paroi s'étendant le long d'un axe central en l'entourant, la paroi étant fermée à ses extrémités pour délimiter une cavité étanche,
le dispositif de mesure comportant, en outre, au moins un organe de mesure de déformation et un calculateur,
chaque organe de mesure de déformation étant configuré pour délivrer un premier signal de mesure représentatif d'une variation d'une première déformation en une première zone de mesure de la paroi, et un deuxième signal de mesure représentatif d'une variation d'une deuxième déformation, selon une direction distincte de celle de la première déformation, en une deuxième zone de mesure de la paroi,
le calculateur étant configuré pour calculer une grandeur de pression s'appliquant sur la paroi et/ou une grandeur de température au niveau de la paroi uniquement à partir du premier signal de mesure, du deuxième signal de mesure, et éventuellement d'un ou plusieurs paramètres sélectionnés dans le groupe constitué par une pression hydrostatique initiale, une température initiale s'exerçant dans la cavité, une variation d'une pression interne de la cavité et une éventuelle variation d'un effort longitudinal additionnel distinct d'une variation d'un effort longitudinal généré par une variation de pression, les grandeurs de pression et de température étant décorrélées l'une de l'autre. En effet, avec un tel dispositif de mesure, les efforts de pression s'exercent sur toute la paroi qui présente une forme longitudinale autour de l'axe central, offrant de ce fait, deux variations de déformations mécaniques de valeurs différentes, celle selon la longueur (variation de déformation longitudinale), celle selon la circonférence (variation de déformation orthoradiale).

L'organe de mesure permet de plus d'obtenir des signaux de mesure selon deux directions distinctes l'une de l'autre, en raison de ces différents types de déformations auxquels est soumise la paroi, toutes deux soumises à une influence en température identique. L'utilisation des deux signaux permet de supprimer l'influence de la température, et tout autre phénomène additionnel se caractérisant par une influence identique sur chacun des signaux de mesure (*e.g*. : rayonnements ionisants), à partir d'une simple soustraction. Ainsi, la valeur obtenue à partir d'une telle soustraction est proportionnelle à la déformation mécanique de la paroi tout en supprimant l'influence de la température. De ce fait, partant des paramètres géométriques de la paroi et des conditions de pression initiales de la cavité, il est possible de déterminer une grandeur de la pression s'exerçant sur la paroi et la température à laquelle elle est soumise.

De plus, en raison de l'utilisation d'une cavité centrale dans le cadre de l'invention, les contraintes s'exerçant sur la paroi sont mieux contrôlées vis-à-vis de l'art antérieur, celles-ci ne présentant pas de concentrations de contraintes, et autorisent, de ce fait, une plage de pression et de température accessible à l'invention beaucoup plus importante que celle accessible par les dispositifs de l'art antérieur.

De même, avec une telle cavité centrale et à partir de la caractéristique des organes de mesure de déformation, la sensibilité de mesure avec le procédé selon l'invention est parfaitement prédictible.

De plus, des modes de réalisation particuliers de l'invention permettent dans certains cas, une mesure de pression indépendante de la variation d'efforts longitudinaux externes additionnels, i.e. : autres que ceux exercés par la seule pression hydrostatique.

On notera que par grandeur de pression et/ou de température, il est entendu, ci-dessus et dans le reste de ce document, une grandeur de pression et/ou température correspondant à l'une parmi une valeur absolue, une valeur relative, une valeur de variation ou encore une valeur arbitraire basée sur l'une quelconque desdites valeurs absolue, relative ou de variation.

Suivant d'autres aspects avantageux de l'invention, le procédé de mesure comporte une ou plusieurs des caractéristiques suivantes, prise(s) isolément ou suivant toutes les combinaisons techniquement possibles qui sont listées ci-après en association avec certains des avantages qui leur sont associés.

La cavité peut présenter un vide au moins primaire.

De cette manière, la cavité, en raison de son étanchéité, présente une pression interne sensiblement constante, i.e. : qui évolue peu avec la température au regard de la gamme de pressions adressable par le dispositif, ce qui facilite les calculs à mettre en œuvre par le calculateur pour la détermination de la pression externe et/ou la température.

Par « vide au moins primaire », il est entendu que la pression dans la cavité est inférieure ou égale à 100 Pascal (ou 1 mbar), voire inférieure ou égale à 10 Pascal (0,1 mbar).

Dans le mode de réalisation revendiqué, la première zone de mesure et la deuxième zone de mesure sont confondues,
chaque organe de mesure comprenant un capteur fibré comportant un segment de fibre optique dans lequel est inscrit un réseau de Bragg, le capteur fibré étant fixé dans la paroi,
le capteur fibré étant configuré pour délivrer le premier signal de mesure, indicatif d'une première longueur d'onde d'une lumière réfléchie par le réseau de Bragg, dite première longueur d'onde de Bragg, et se propageant suivant un axe ordinaire du segment de fibre optique, et le deuxième signal de mesure, indicatif d'une deuxième longueur d'onde d'une lumière réfléchie par le réseau de Bragg, dite deuxième longueur d'onde de Bragg, et se propageant suivant un axe extraordinaire du segment de fibre optique.

Avec une telle configuration dans lequel le capteur fibré est soumis à des phénomènes de biréfringence, le capteur fibré permet de fournir à la fois le premier et le deuxième signal de mesure selon respectivement l'axe ordinaire et l'axe extraordinaire de la fibre optique. Au moins le premier capteur peut être un capteur fibré comprenant un guide optique dans lequel est gravé un réseau de Bragg, le premier capteur fibré étant fixé dans une épaisseur de la paroi, la première direction de mesure étant définie par une direction de propagation du guide optique,
le guide optique étant en contact direct avec la paroi ou étant radialement entouré par une gaine présentant un module d'élasticité supérieur ou égal à une fraction prédéterminée d'un module d'élasticité de la paroi, voire supérieur à ce même module prédéterminé, le guide d'onde étant alors fixé dans l'épaisseur de la paroi par ladite gaine.

Le coefficient de Poisson de la gaine peut être égal au coefficient de la paroi.

Une telle gaine pouvant venir en complément à une gaine optique du guide d'onde, elle peut être dénommée gaine mécanique.

Avec une telle configuration, on s'assure que le capteur fibré est soumis aux phénomènes de biréfringence.

La paroi présente une forme de cylindre de révolution à bases circulaires fermées, et la grandeur de pression et/ou de température peut être une variation de pression et/ou de température, le calculateur étant configuré pour calculer la variation de la pression externe selon : [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{κ}_{ε}-{κ}_{P}E\right) \left(2-{cos}^{2}\left(ϕ\right)\right)} + \frac{{r}^{2} {cos}^{2} \left(ϕ\right)}{{πr}_{0 , int}^{2} {r}_{0 , ext}^{2} \left(2-{cos}^{2}\left(ϕ\right)\right)} δF$ et/ou la variation de la température selon : [Math 10] $ΔT = \frac{1}{2 {κ}_{T}} \left(\begin{matrix}{ΔΨ}_{1} + {ΔΨ}_{2} - 2 {κ}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-3{κ}_{ε}-{κ}_{P}E\right)}\left(1+\frac{{κ}_{P} E \left({r}^{2}-{r}_{0 , int}^{2}\right) - 3 {κ}_{ε} {r}_{0 , int}^{2}}{{κ}_{P} {Er}^{2} \left(2-{cos}^{2}\left(ϕ\right)\right)}{cos}^{2}\left(ϕ\right)\right)\right) \\ + \frac{4 {κ}_{ε} {r}_{0 , int}^{2} cos \left(2ϕ\right) - 2 {κ}_{P} E \left({r}^{2}-{r}_{0 , int}^{2}\right) {cos}^{2} \left(ϕ\right)}{{πr}_{0 , int}^{2} E \left({r}_{0 , ext}^{2}-{r}_{0 , int}^{2}\right) \left(2-{cos}^{2}\left(ϕ\right)\right)} δF\end{matrix}\right)$ où ΔPₑₓₜ est la variation de la pression externe ;
ΔT est la variation de la température de la paroi ;
ΔΨ₁ et ΔΨ₂ sont respectivement la variation relative de la première longueur d'onde de Bragg du réseau de Bragg et la variation relative de la deuxième longueur d'onde de Bragg du réseau de Bragg, le réseau de Bragg présentant une double résonnance fondamentale en raison de la biréfringence ;
r_{0,ext} est un rayon externe de la paroi ;
r_{0,int} est un rayon interne de la paroi ;
r est une distance du segment de fibre optique par rapport à l'axe central ;
E et v sont respectivement le module d'Young et le coefficient de Poisson du matériau dans lequel est réalisée la paroi ;
ϕ est un angle de mesure défini entre une direction de mesure du capteur fibré et un plan normal à l'axe central ;
κ_{ε} est une sensibilité mécanique des capteurs, égale à un coefficient de proportionnalité entre une variation relative de la grandeur de suivi correspondante et une variation de déformation mécanique ;
κ_{P} est une sensibilité en pression du capteur fibré, égale à un coefficient de proportionnalité entre une variation relative de l'une de la première longueur d'onde de Bragg et la deuxième longueur d'onde de Bragg et une variation de pression appliquée au capteur fibré ;
κ_{T} est une sensibilité en température du capteur fibré, égale à un coefficient de proportionnalité entre une variation relative de l'une de la première longueur d'onde de Bragg et la deuxième longueur d'onde de Bragg et une variation de température appliquée au capteur fibré ; et
δF est la variation d'un effort longitudinal additionnel exercé selon l'axe central sur la paroi, distincte d'une variation d'un effort longitudinal exercé par la variation de pression interne ou la variation de pression externe.

Avec une telle configuration du calculateur, il est possible d'obtenir une mesure précise de la grandeur de pression et/ou de température, puisqu'elle est basée sur une résolution formelle du problème thermomécanique correspondant.

La paroi peut être un guide optique cylindrique creux fermé à ses extrémités,
chaque organe de mesure comprenant un réseau de Bragg inscrit dans un segment du guide optique creux,
chaque organe de mesure étant configuré pour délivrer le premier signal de mesure, indicatif d'une première longueur d'onde d'une lumière réfléchie par le réseau de Bragg, et se propageant suivant l'un parmi un axe ordinaire et un axe extraordinaire du segment de guide optique creux.

De cette manière, le réseau de Bragg de l'organe de mesure étant directement inscrit dans la paroi, il en résulte une meilleure réponse, sans discontinuité, aux déformations mécaniques de la paroi, liées à la pression et la température qui s'appliquent sur cette dernière.

Chaque organe de mesure peut comprendre, en outre, un deuxième guide optique secondaire agencé dans la cavité du guide optique creux en étant fixé à ce dernier et s'étendant le long de l'axe central,
chaque organe de mesure étant également configuré pour délivrer le deuxième signal de mesure, indicatif d'une deuxième longueur d'onde d'une lumière réfléchie par le réseau de Bragg du guide optique secondaire.

Avec une telle configuration, le deuxième guide optique fournit un signal exempt de biréfringence. Ainsi, il est possible d'exploiter deux signaux distincts : le premier signal indicatif d'une première longueur d'onde d'une lumière réfléchie par le réseau de Bragg du segment de guide optique creux et se propageant suivant l'un parmi un axe ordinaire et un axe extraordinaire du segment de guide optique creux, et le deuxième signal fourni lors de l'interrogation du réseau de Bragg du guide optique secondaire.

Chaque organe peut être en outre configuré pour délivrer le deuxième signal de mesure, indicatif d'une deuxième longueur d'onde d'une lumière réfléchie par le réseau de Bragg, et se propageant suivant l'autre parmi un axe ordinaire et un axe extraordinaire du segment de guide optique creux.

De cette manière, un seul capteur est nécessaire.

En outre, l'invention a pour objet une installation comprenant :
- un élément présentant un espace dont la pression et/ou la température sont à surveiller,
- un dispositif de mesure selon l'invention, la paroi aux extrémités fermées étant logée dans l'espace de manière à permettre une mesure d'une grandeur de pression et/ou de température s'exerçant dans l'espace.

Une telle installation bénéficie des avantages liés au dispositif de mesure selon l'invention.

L'élément peut être sélectionné parmi un moteur, tel qu'une turbomachine, et une chaudière sous pression, telle que la cuve d'un réacteur nucléaire.

De tels éléments présentant des conditions extrêmes en température et en pression, ils bénéficient particulièrement de l'invention.

L'invention a également pour objet un procédé de mesure d'une variation de pression hydrostatique et/ou de température au moyen d'une paroi s'étendant le long d'un axe central en l'entourant, la paroi étant fermée à ses extrémités pour délimiter une cavité étanche, et d'un organe de mesure configuré pour délivrer un premier signal de mesure représentatif d'une variation d'une première déformation en une première zone de mesure de la paroi, et un deuxième signal de mesure représentatif d'une variation d'une deuxième déformation, selon une direction distincte de celle de la première déformation, en une deuxième zone de mesure de la paroi,
le procédé comprenant les étapes suivantes :
- mesure du premier et du deuxième signal de mesure à partir de l'organe de mesure et éventuellement un ou plusieurs paramètres sélectionnés dans le groupe constitué d'une pression hydrostatique initiale, d'une température initiale s'exerçant dans la cavité, d'une variation d'une pression interne de la cavité et d'une éventuelle variation d'un effort longitudinal additionnel distinct d'une variation d'un effort longitudinal généré par une variation de pression,
- calcul de la variation de la pression s'appliquant sur la paroi et/ou la variation de la température au niveau de la paroi uniquement à partir du premier signal de mesure, du deuxième signal de mesure et éventuellement de l'un ou plusieurs paramètres mesurés qui ont été sélectionnés dans le groupe constitué par une pression hydrostatique initiale, une température initiale s'exerçant dans la cavité, une variation d'une pression interne de la cavité et une éventuelle variation d'un effort longitudinal additionnel distinct d'une variation d'un effort longitudinal généré par une variation de pression, les grandeurs de pression et de température étant décorrélées l'une de l'autre. Dans le mode de mise en œuvre revendiqué, la première zone de mesure et la deuxième zone de mesure sont confondues,

chaque organe de mesure comprenant un capteur fibré comportant un segment de fibre optique dans lequel est inscrit un réseau de Bragg, le capteur fibré étant fixé dans la paroi,
le capteur fibré étant configuré pour délivrer le premier signal de mesure, indicatif d'une première longueur d'onde d'une lumière réfléchie par le réseau de Bragg, dite première longueur d'onde de Bragg, et se propageant suivant un axe ordinaire du segment de fibre optique, et le deuxième signal de mesure, indicatif d'une deuxième longueur d'onde d'une lumière réfléchie par le réseau de Bragg, dite deuxième longueur d'onde de Bragg, et se propageant suivant un axe extraordinaire du segment de fibre optique.

La paroi présente une forme de cylindre de révolution à bases circulaires fermées, et la grandeur de pression et/ou de température peut être une variation de pression et/ou de température, le calculateur étant configuré pour calculer la variation de la pression externe selon : [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{κ}_{ε}-{κ}_{P}E\right) \left(2-{cos}^{2}\left(ϕ\right)\right)} + \frac{{r}^{2} {cos}^{2} \left(ϕ\right)}{{πr}_{0 , int}^{2} {r}_{0 , ext}^{2} \left(2-{cos}^{2}\left(ϕ\right)\right)} δF$ et/ou la variation de la température selon : [Math 10] $ΔT = \frac{1}{2 {κ}_{T}} \left(\begin{matrix}{ΔΨ}_{1} + {ΔΨ}_{2} - 2 {κ}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-3{κ}_{ε}-{κ}_{P}E\right)}\left(1+\frac{{κ}_{P} E \left({r}^{2}-{r}_{0 , int}^{2}\right) - 3 {κ}_{ε} {r}_{0 , int}^{2}}{{κ}_{P} {Er}^{2} \left(2-{cos}^{2}\left(ϕ\right)\right)}{cos}^{2}\left(ϕ\right)\right)\right) \\ + \frac{4 {κ}_{ε} {r}_{0 , int}^{2} cos \left(2ϕ\right) - 2 {κ}_{P} E \left({r}^{2}-{r}_{0 , int}^{2}\right) {cos}^{2} \left(ϕ\right)}{{πr}_{0 , int}^{2} E \left({r}_{0 , ext}^{2}-{r}_{0 , int}^{2}\right) \left(2-{cos}^{2}\left(ϕ\right)\right)} δF\end{matrix}\right)$ où ΔPₑₓₜ est la variation de la pression externe ;
ΔT est la variation de la température de la paroi ;
ΔΨ₁ et ΔΨ₂ sont respectivement la variation relative de la première longueur d'onde de Bragg du réseau de Bragg et la variation relative de la deuxième longueur d'onde de Bragg du réseau de Bragg, le réseau de Bragg présentant une double résonnance fondamentale en raison de la biréfringence ;
r_{0,ext} est un rayon externe de la paroi ;
r_{0,int} est un rayon interne de la paroi ;
r est une distance du segment de fibre optique par rapport à l'axe central ;
E et v sont respectivement le module d'Young et le coefficient de Poisson du matériau dans lequel est réalisée la paroi ;
ϕ est un angle de mesure défini entre une direction de mesure du capteur fibré et un plan normal à l'axe central ;
κ_{ε} est une sensibilité mécanique des capteurs, égale à un coefficient de proportionnalité entre une variation relative de la grandeur de suivi correspondante et une variation de déformation mécanique ;
κ_{P} est une sensibilité en pression du capteur fibré, égale à un coefficient de proportionnalité entre une variation relative de l'une de la première longueur d'onde de Bragg et la deuxième longueur d'onde de Bragg et une variation de pression appliquée au capteur fibré ;
κ_{T} est une sensibilité en température du capteur fibré, égale à un coefficient de proportionnalité entre une variation relative de l'une de la première longueur d'onde de Bragg et la deuxième longueur d'onde de Bragg et une variation de température appliquée au capteur fibré ; et
δF est la variation d'un effort longitudinal additionnel exercé selon l'axe central sur la paroi, distincte d'une variation d'un effort longitudinal exercé par la variation de pression interne ou la variation de pression externe.

Les valeurs absolues de température ou de pression hydrostatique peuvent être obtenues à partir des variations de celles-ci, et de leurs valeurs initiales.

D'autre part, si un vide, même primaire, règne au sein de la cavité étanche, la mesure de la variation de la pression hydrostatique, compte tenu de la gamme de pressions adressable par ce capteur, typiquement de plusieurs ordres de grandeur supérieure à un vide primaire, est équivalente à la mesure absolue de cette pression, indépendamment des effets de la température, et plus généralement de tout effet perturbateur se traduisant par une influence identique sur chacun des signaux de mesure.

Un tel procédé permet de mettre en œuvre le dispositif de mesure de l'invention et de bénéficier des avantages qui y sont attachés.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
[Fig.1] illustre un dispositif de mesure d'une variation de pression hydrostatique et/ou de température selon un premier mode de réalisation de l'invention.
[Fig. 2A] illustre, selon une coupe transversale, une première possibilité selon un deuxième mode de réalisation dans lequel l'organe de mesure est intégré dans la paroi.
[Fig. 2B] illustre, selon une coupe transversale, une deuxième possibilité selon un deuxième mode de réalisation dans lequel l'organe de mesure est intégré dans la paroi.
[Fig. 2C] illustre, selon une coupe transversale, une troisième possibilité selon un deuxième mode de réalisation dans lequel l'organe de mesure est intégré dans la paroi.
[Fig. 2D] illustre schématiquement l'application sur la paroi illustrée sur la figure 2A d'une pression hydrostatique externe s'exerçant dans un espace à surveiller dans lequel est installé le dispositif de mesure.
[Fig. 3] illustre un dispositif de mesure d'une variation de pression hydrostatique et/ou de température selon un troisième mode de réalisation de l'invention dans lequel la paroi est un guide optique creux, la figure 3 montrant sur sa partie gauche une section radiale dudit dispositif, sur la partie en haut à droite une coupe longitudinale partielle, et en bas à droite une vue de dessous figurant un réseau de Bragg.
[Fig. 4A] illustre une section radiale d'un dispositif de mesure d'une variation de pression hydrostatique et/ou de température selon une première possibilité selon un quatrième mode de réalisation de l'invention dans lequel la paroi est un guide optique creux dans l'espace intérieur duquel est logé un guide optique secondaire central.
[Fig. 4B] illustre une section radiale d'un dispositif de mesure d'une variation de pression hydrostatique et/ou de température selon une deuxième possibilité selon un quatrième mode de réalisation de l'invention dans lequel la paroi est un guide optique creux dans l'espace intérieur duquel est logé un guide optique secondaire central.
[Fig. 4C] illustre une vue en coupe longitudinale partielle selon un axe IVc-IVc d'un dispositif tel qu'illustré sur la figure 4A.
[Fig. 5A] illustre une section radiale d'un dispositif de mesure d'une variation de pression hydrostatique et/ou de température selon un cinquième mode de réalisation de l'invention dans lequel la paroi est un guide optique creux en surface interne duquel est logé un guide optique secondaire fixé à la paroi.
[Fig. 5B] illustre une section radiale d'un dispositif de mesure d'une variation de pression hydrostatique et/ou de température selon une variante du cinquième mode de réalisation de l'invention dans lequel la paroi est un guide optique creux en surface interne duquel est logé un guide optique secondaire fixé à la paroi.
[Fig. 5C] illustre une vue en coupe longitudinale partielle selon un axe de coupe Vc-Vc d'un dispositif tel qu'illustré sur la figure 5B.
[Fig. 6] illustre un exemple d'application d'un dispositif de mesure selon l'invention dans lequel le dispositif de mesure équipe une turbomachine avec laquelle il forme une installation.

### DESCRIPTION DÉTAILLÉE

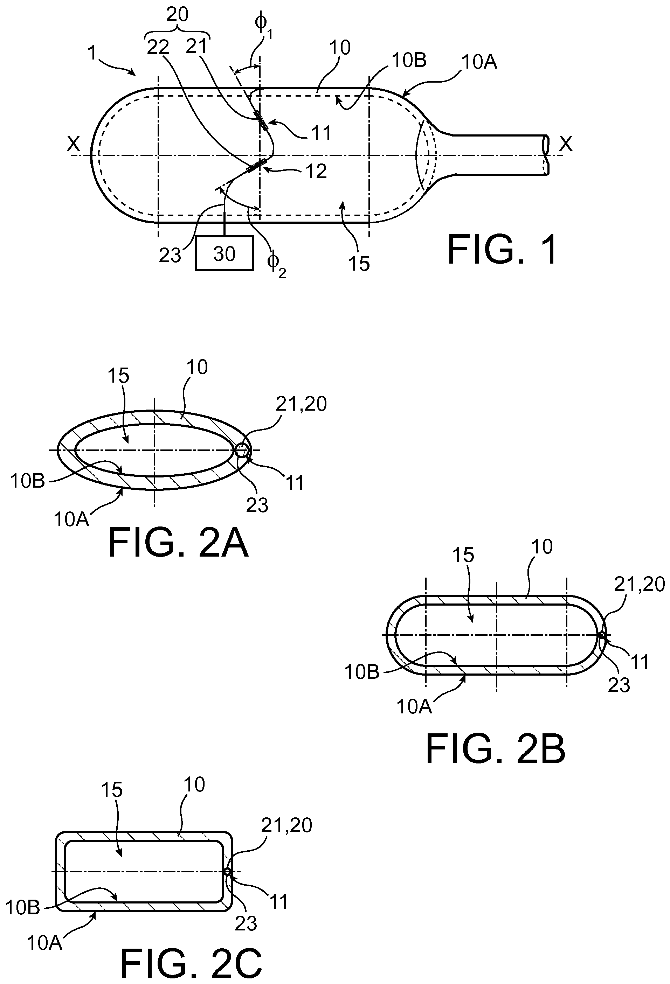

La figure 1 illustre un dispositif de mesure 1 d'une grandeur de pression hydrostatique et/ou de température selon un premier mode de réalisation de l'invention.

Un tel dispositif de mesure 1 est particulièrement adapté pour mesurer une variation de pression et de température dans des environnements extrêmes tels que par exemple dans certains espaces (notamment les zones de combustion et de compression) des turbomachines et autre type de motorisation. D'autres applications de l'invention que l'aéronautique et l'automobile sont bien entendu parfaitement envisageables sans que l'on sorte du cadre de l'invention. L'invention est ainsi également particulièrement adaptée pour la mesure de pression hydrostatique et de température dans les centrales électriques telles que les centrales thermiques à flamme (combustible fossile ou à déchet), centrales nucléaires (e.g. : au sein même de la cuve du réacteur nucléaire) ou encore les centrales géothermiques.

Le dispositif de mesure 1 autorise des mesures d'une grandeur de pression, telle qu'une pression absolue, et d'une grandeur de température, telle qu'une variation de température, qui sont décorrélées l'une de l'autre, ceci même dans des environnements extrêmes, tels que ceux mentionnés ci-dessus, qui présentent des variations importantes de pression hydrostatique et de température.

Un tel dispositif de mesure 1 comprend :
- une paroi 10 s'étendant le long d'un axe central X-X en l'entourant, la paroi 10 étant fermée à ses extrémités pour délimiter une cavité 15 étanche,
- au moins un organe de mesure 20 de déformation, et
- et un calculateur 30.

Conformément à l'invention, l'organe de mesure 1 est configuré pour délivrer un premier signal de mesure représentatif d'une variation d'une première déformation en une première zone de mesure 11 de la paroi 10, et un deuxième signal de mesure représentatif d'une variation d'une deuxième déformation, selon une direction distincte de celle de la première déformation, en une deuxième zone de mesure 12 de la paroi 10. On notera que si dans ce premier mode de réalisation, les première et deuxième zones de mesure 11, 12 sont différenciées l'une de l'autre, elles peuvent, comme cela est démontré ci-après dans le cadre du deuxième mode de réalisation, être confondues. Dans le présent mode de réalisation, comme illustré sur la figure 1, la paroi 10 présente une forme cylindrique de révolution autour de l'axe central X-X. Bien entendu, si une telle forme est à préférer, puisqu'elle facilite la détermination analytique des grandeurs de pression hydrostatique et de température, d'autres formes de paroi 10 sont envisageables sans que l'on sorte du cadre de l'invention. On peut ainsi par exemple citer les formes cylindriques selon trois variantes d'un deuxième mode de réalisation dont les sections radiales sont illustrées par les figures 2A à 2C.

La paroi 10 présente une surface interne 10B, délimitant la cavité 15 et une surface externe 10A sur laquelle s'applique une pression extérieure.

Dans ce premier mode de réalisation, l'organe de mesure 20 comprend un premier capteur fibré 21 et un deuxième capteur fibré 22, distinct du premier capteur 21, chacun fixé à la paroi 10. Dans le présent mode de réalisation, le premier et le deuxième capteur fibrés 21, 22 sont fixés à la surface externe de la paroi 10. Bien entendu, d'autres configurations sont également envisageables sans que l'on sorte du cadre de l'invention. Ainsi, selon diverses variantes de l'invention, il est parfaitement envisageable que :
- les premier et deuxième capteurs fibrés 21, 22 soient fixés sur la surface interne 10B de la paroi,
- les premier et deuxième capteurs fibrés 21, 22 soient fixés sur la surface externe 10A de la paroi,
- l'un du premier et du deuxième capteur fibré 21, 22 soit fixé sur la surface externe 10A, l'autre étant fixé sur la surface interne 10B,
- les premier et deuxième capteurs fibrés 21, 22 soient intégrés dans la paroi 10 à une profondeur de cette dernière identique ou distincte,
- l'un du premier et du deuxième capteur fibré 21, 22 soit fixé à l'une de la surface interne 10B et de la surface externe 10A de la paroi, l'autre étant intégré dans la paroi 10.

Le premier capteur 21 et le deuxième capteur 22 sont respectivement associés à une première et à une deuxième direction de mesure définissant respectivement un premier angle de mesure ϕ₁ et un deuxième angle de mesure ϕ₂ avec un plan normal à l'axe central X-X. Conformément à la possibilité illustrée sur la figure 1, le premier et le deuxième capteur fibrés 21, 22 sont fournis le long de la même fibre optique 23. Selon cette possibilité, et afin de permettre une interrogation de chacun des premier et deuxième capteurs fibrés sans risque d'interférence, le premier et le deuxième capteur fibrés 21, 22 peuvent présenter une longueur d'onde d'interrogation, plage de longueurs d'onde d'interrogation, distinctes l'une de l'autre.

Bien entendu, selon une variante non illustrée, les premier et deuxième capteurs fibrés 21, 22 peuvent être intégrés chacun dans une fibre optique respective. Selon cette possibilité, les premier et deuxième capteurs fibrés peuvent bien entendu présenter une longueur d'onde d'interrogation, plage de longueurs d'onde d'interrogation, identique sans qu'il y ait un risque d'interférence.

Le premier angle de mesure ϕ₁ et le deuxième angle de mesure ϕ₂ sont préférentiellement choisis afin que leur différence soit égale à π/2 modulo π. De manière encore plus préférentielle, l'un du premier angle de mesure ϕ₁ et du deuxième angle de mesure ϕ₂ présente un angle nul, modulo π, avec un plan normal avec l'axe central X-X l'autre du premier angle de mesure ϕ₁ et du deuxième angle de mesure ϕ₂ présentant un angle droit (π/2), modulo π, vis-à-vis de ce même plan (autrement dit, il permet de mesurer un signal de déformation longitudinale, c'est à dire selon la direction de l'axe central X-X).

Le premier capteur fibré 21 est, en outre, configuré pour délivrer le premier signal de mesure indicatif d'une première grandeur de suivi, la première grandeur de suivi étant telle qu'une variation relative de ladite première grandeur de suivi est représentative de la variation de la première déformation, cette même première déformation étant une déformation locale de la première zone de mesure 11 suivant la première direction de mesure. De même, le deuxième capteur 22 est, en outre, configuré pour délivrer le deuxième signal de mesure indicatif d'une deuxième grandeur de suivi, la deuxième grandeur de suivi étant telle qu'une variation relative de ladite deuxième grandeur de suivi est représentative de la variation de la deuxième déformation, cette même deuxième déformation étant une déformation locale de la deuxième zone de mesure 12 suivant la deuxième direction de mesure.

Selon une possibilité de l'invention illustrée sur la figure 1, le premier capteur fibré 21 comporte un réseau de Bragg (ou miroir de Bragg), la première grandeur de suivi étant la longueur d'onde de résonnance caractéristique du réseau de Bragg. En effet, conformément aux connaissances de l'homme du métier, un tel réseau de Bragg présente une longueur d'onde de résonnance λ_{Bragg} (dite longueur d'onde de Bragg) qui est directement liée à l'indice effectif n_{eff} de son guide optique et au pas Λ de modulation longitudinale périodique de cet indice effectif, lorsque la fibre optique est monomode, selon la relation de Bragg : λ_{Bragg} = 2 n_{eff} Λ (résonnance d'ordre 1), et donc aux déformations (d'origines mécanique et thermique) auxquelles il est soumis. De ce fait, il est connu de pouvoir réaliser un suivi de déformation à partir de la variation relative de la longueur d'onde de Bragg (résonnance d'ordre 1 ou d'ordres supérieurs). Ces déformations, peuvent aussi bien être d'origine mécanique (ici déformation de la paroi 10 sous les efforts liés à la pression hydrostatique s'appliquant sur celle-ci, ou efforts longitudinaux externes additionnels, tels que ceux liés à une dilatation différentielle entre la paroi 10 et la structure externe à laquelle aura été éventuellement attaché le dispositif, différents de ceux exercés par la seule pression hydrostatique) que d'origine thermique (dilatation thermique de la paroi 10 avec la température).

Le réseau de Bragg peut être réalisé par procédé de photo-inscription traditionnelle (e.g. : masque de phase, miroir de Lloyd) de façon à induire une modulation longitudinale périodique de son indice effectif (celui-ci pouvant ensuite subir un processus de régénération afin de le stabiliser en température), ou point à point par procédé laser femto-seconde. La paroi peut par exemple être réalisée en silice dopée (matrice SiO₂), ou en saphir dopé (matrice en cristal d'alumine Al₂O₃).

Bien entendu, un tel exemple de réalisation de réseaux de Bragg n'est fourni qu'à titre d'exemple et n'est nullement limitatif. Ainsi, l'invention peut être mise en œuvre à partir d'autres types de réseaux de Bragg, ou de capteur, réalisés à partir d'autres types de matériaux pour la paroi sans que l'on sorte du cadre de l'invention.

Selon ce premier mode de réalisation dans lequel l'organe de mesure 20 comprend les premier et le deuxième capteurs fibrés 21, 22 agencés respectivement en la première et la deuxième zone de mesure 11, 12 qui sont distinctes l'une de l'autre, les phénomènes de biréfringence ne sont pas recherchés. Ainsi, dans ce premier mode de réalisation, le cœur optique de la fibre optique 23 est de manière avantageuse radialement entouré par une gaine, dite « gaine mécanique », présentant un module d'élasticité inférieur à une fraction prédéterminée d'un module d'élasticité de la paroi 10, cette gaine étant elle-même en contact avec la paroi. Ladite fraction peut être inférieure ou égale au cinquième, au dixième voire au vingtième. De cette manière, on limite l'anisotropie des déformations mécaniques s'exerçant sur le cœur optique qui pourrait être à l'origine de phénomènes de biréfringence, en particulier lorsque le capteur fibré est situé dans l'épaisseur de la paroi.

On notera que bien entendu, si dans le présent mode de réalisation, le premier capteur fibré 21 comporte un réseau de Bragg, d'autres types de transducteurs sont parfaitement envisageables sans que l'on sorte du cadre de l'invention. Ainsi le premier capteur fibré 21 peut également être une portion de fibre optique, la grandeur de suivi étant alors un signal de rétrodiffusion, tel qu'un signal de rétrodiffusion de type Brillouin, Raman ou Rayleigh. De même, l'organe de mesure 20 peut également comporter un ou plusieurs capteurs qui ne sont pas fibrés, tels qu'un capteur à corde vibrante ou une jauge de déformation électrique, un émetteur acoustique couplé à un récepteur acoustique, sans que l'on sorte du cadre de l'invention.

L'organe de mesure 20 selon ce premier mode de réalisation permet de fournir le premier signal de mesure représentatif d'une variation de première déformation en la première zone de mesure 11 de la paroi 10, et le deuxième signal de mesure représentatif d'une variation d'une deuxième déformation. Ces premier et deuxième signaux peuvent être obtenus à partir d'un système d'interrogation, non illustré, compris dans le calculateur 30.

Selon cette possibilité et en conformité avec un organe de mesure comprenant un premier et deuxième capteur fibrés 21, 22 comprenant chacun un réseau de Bragg, le système d'interrogation comprend :
- une source de lumière large bande incluant les plages de longueur d'onde d'interrogation pour les réseaux de Bragg des premier et deuxième capteurs fibrés 21, 22,
- un spectromètre optique permettant de détecter et caractériser (en puissance et longueur d'onde) le signal réfléchi par les réseaux de Bragg des premier et deuxième capteurs fibrés 21, 22.

Le calculateur 30 comporte en outre une unité de traitement, non illustrée, configurée pour commander le système de traitement, récupérer les signaux issus de l'interrogation de l'organe de mesure 20 par le système d'interrogation et déterminer les grandeurs de variations de pression et/ou de température s'exerçant sur la paroi 10 à partir desdits signaux, ainsi que leur valeur absolue dès lors qu'une pression hydrostatique initiale s'exerçant dans la cavité 15 et/ou une température initiale sont connues.

De manière avantageuse, le calculateur 30 peut mettre en œuvre une détermination de la grandeur de pression et/ou de température, ou de leurs variations respectives s'exerçant sur la paroi 10 de façon formelle et ainsi permettre une détermination aisée de ces grandeurs.

Afin d'exemplifier une telle détermination, il est possible de prendre l'exemple d'un dispositif selon ce premier mode de réalisation tel qu'illustré sur la figure 1. Conformément à la figure 1, la paroi 10 est cylindrique de révolution avec r_{0,int} et r_{0,ext} les rayons intérieur et extérieur de la paroi 10. La paroi 10 présente une dimension longitudinale qui est préférentiellement supérieure ou égale à 10 fois le rayon extérieur r_{0,ext}. L'organe de mesure 20 comprend des premier et deuxième capteurs fibrés 21, 22 comprenant respectivement un premier et un deuxième réseau de Bragg. Conformément à ce premier mode de réalisation, différentes configurations sont envisageables.

Dans un premier exemple, les premier et deuxième capteurs fibrés 21, 22, conformément à ce qui est illustré sur la figure 1, peuvent être agencés sur la surface extérieure 10A de la paroi 10.

Selon un tel premier exemple, l'inventeur a identifié que les variations de pression externe ΔPₑₓₜ et de température ΔT de la paroi 10, ici une température de contact, peuvent être déterminées à partir des équations suivantes : [Math 1] ${ΔP}_{ext} = \frac{E \left({ΔΨ}_{1}-{ΔΨ}_{2}\right) \left({r}_{0 , ext}^{2}-{r}_{0 , int}^{2}\right)}{{κ}_{ε} \left(1+ν\right) {r}_{0 , int}^{2} \left({cos}^{2}\left({ϕ}_{2}\right)-{cos}^{2}\left({ϕ}_{1}\right)\right)} - \frac{δF}{{πr}_{0 , int}^{2}} + {ΔP}_{int}$ [Math 2] $ΔT = \frac{1}{{κ}_{T}} \left(\begin{matrix}\frac{\left({Δψ}_{2}-{Δψ}_{1}\right) \left({κ}_{P}E\left({r}_{0 , ext}^{2}-{r}_{0 , int}^{2}\right)-{κ}_{ε}\left(1-2ν\right){r}_{0 , ext}^{2}\right)}{{κ}_{ε} \left(1+ν\right) {r}_{0 , int}^{2} \left({cos}^{2}\left({ϕ}_{2}\right)-{cos}^{2}\left({ϕ}_{1}\right)\right)} + \frac{{Δψ}_{1} {cos}^{2} \left({ϕ}_{2}\right) - {Δψ}_{2} {cos}^{2} \left({ϕ}_{1}\right)}{{cos}^{2} \left({ϕ}_{2}\right) - {cos}^{2} \left({ϕ}_{1}\right)} \\ + \left(\frac{1 - 2 ν}{E}{κ}_{ε}-{κ}_{P}\right) {ΔP}_{int} + \frac{1}{πE} \left(\frac{{κ}_{P} E - {κ}_{ε} \left(1-2ν\right)}{{r}_{0 , int}^{2}}-\frac{2 {κ}_{ε} \left(1-ν\right)}{{r}_{0 , ext}^{2} - {r}_{0 , int}^{2}}\right) δF\end{matrix}\right)$
où ΔPₑₓₜ est la variation de la pression externe ;
ΔT est la variation de la température de la paroi 10 ;
ΔΨ₁ et ΔΨ₂ sont respectivement la variation relative d'une première longueur d'onde de Bragg du premier réseau de Bragg et la variation relative d'une deuxième longueur d'onde de Bragg du deuxième réseau de Bragg ;
r_{0,ext} est le rayon externe de la paroi ;
r_{0,int} est le rayon interne de la paroi ;
E et v sont respectivement le module d'Young et le coefficient de Poisson du matériau dans lequel est réalisée la paroi 10 ;
ϕ₁ et ϕ₂ sont respectivement le premier et deuxième angle de mesure ;
κ_{ε} est une sensibilité mécanique du premier et deuxième capteurs fibrés 21, 22, égale à un coefficient de proportionnalité entre une variation relative des première et deuxième longueurs d'onde de Bragg et une variation de déformation mécanique ;
κ_{P} est une sensibilité en pression des premier et deuxième capteurs fibrés 21, 22, égale à un coefficient de proportionnalité entre une variation relative des première et deuxième longueur d'onde de Bragg et une variation de pression hydrostatique appliquée aux premier et deuxième capteurs fibrés 21, 22 ;
κ_{T} est une sensibilité en température des premier et deuxième capteurs fibrés 21, 22, égale à un coefficient de proportionnalité entre une variation relative des première et deuxième longueur d'onde de Bragg et une variation de température appliquée aux premier et deuxième capteurs fibrés ; et
δF est la variation d'un effort longitudinal exercé selon l'axe X-X sur la paroi 10, distinct d'une variation d'un effort longitudinal exercé par la variation de pression interne ou la variation de pression externe.

La température de contact se définit à l'équilibre thermique, dans le cas de deux milieux plans semi-infinis en contact plan l'un de l'autre, comme la moyenne arithmétique de la température de surface de chaque milieu au contact l'un de l'autre, pondérée par l'effusivité *a* de chaque milieu, l'effusivité étant définie, pour chaque milieu considéré, comme la racine carrée du produit de sa masse volumique ρ, de sa conductivité thermique k, et de sa capacité calorifique massique c : [Math 30] $a = \sqrt{kρc}$

Entre deux milieux plans semi-infinis notés *i* et *ii,* la température de contact T_{contact*_{i,ii}*}, égale pour chacune des deux surfaces en contact, est telle que : [Math 31] ${T}_{{contact}_{i , ii}} = \frac{{a}_{i} {T}_{i} + {a}_{ii} {T}_{ii}}{{a}_{i} + {a}_{ii}}$

Par extension, les capteurs fibrés, lorsque ceux-ci sont positionnés en surface interne ou externe de la paroi, compte tenu de leur faible inertie thermique, réalisent une mesure de la température de contact entre cette paroi (interne ou externe) et le milieu avec lequel cette paroi est en contact direct.

La température de contact est toujours une température intermédiaire entre la température de chaque milieu ; selon la pondération pilotée par l'effusivité de chaque milieu, cette température de contact peut alors être plus proche de celle de l'un ou de l'autre milieu.

Ainsi, pour une paroi en silice au contact de l'air, la température de contact pourra être assimilée à celle de la surface de la paroi, compte tenu de la pondération majoritaire de l'effusivité de la silice par rapport à celle de l'air.

Lorsque les capteurs fibrés sont noyés dans l'épaisseur même de la paroi, ceux-ci réalisent une mesure locale de sa température, au sens traditionnel du terme, et on ne parle plus dans ce cas de température de contact, mais seulement de température.

On notera que dans le cadre de la possibilité dans laquelle la cavité 15 présente un vide au moins primaire, la variation de ΔPᵢₙₜ peut être considérée négligeable au regard de la gamme de pressions adressable par le dispositif de mesure, les calculs étant ainsi simplifiés.

De même, si la valeur de ΔPᵢₙₜ ci-dessus n'est pas fournie, celle-ci peut également être obtenue à partir d'une pression hydrostatique initiale P_{0,int} de la cavité 15, puisque celle-ci dépend uniquement de la pression externe appliquée sur la surface externe 10A de la paroi 10 et de la température interne régnant au sein de la cavité 15.

De même, si, pour des raisons de simplification, seules les équations des variations de pression et de température ci-dessus sont fournies, celles-ci peuvent être, d'une manière identique, déduites formellement des équations ci-dessus, ceci à partir d'uniquement des premier et deuxième signaux de mesure, et de la pression hydrostatique initiale et de la température initiale s'exerçant dans la cavité 15.

Dans un deuxième exemple, les premier et deuxième capteurs fibrés 21, 22, selon une variante du premier mode de réalisation, peuvent être agencés sur la surface interne 10B de la paroi 10.

Selon un tel deuxième exemple, l'inventeur a identifié que les variations de pression externe ΔPₑₓₜ et de température ΔT de la paroi 10, ici une température de contact, peuvent être déterminées à partir des équations suivantes : [Math 3] ${ΔP}_{ext} = \frac{E \left({ΔΨ}_{1}-{ΔΨ}_{2}\right) \left({r}_{0 , ext}^{2}-{r}_{0 , int}^{2}\right)}{{κ}_{ε} \left(1+ν\right) {r}_{0 , ext}^{2} \left({cos}^{2}\left({ϕ}_{2}\right)-{cos}^{2}\left({ϕ}_{1}\right)\right)} - \frac{δF}{{πr}_{0 , ext}^{2}} + {ΔP}_{int}$ [Math 4] $ΔT = \frac{1}{{κ}_{⊤}} \left(\begin{matrix}\frac{1 - 2 ν}{1 + ν} \frac{{ΔΨ}_{1} - {ΔΨ}_{2}}{{cos}^{2} \left({ϕ}_{2}\right) - {cos}^{2} \left({ϕ}_{1}\right)} + \frac{{ΔΨ}_{1} {cos}^{2} \left({ϕ}_{2}\right) - {ΔΨ}_{2} {cos}^{2} \left({ϕ}_{1}\right)}{{cos}^{2} \left({ϕ}_{2}\right) - {cos}^{2} \left({ϕ}_{1}\right)} + \left(\frac{1 - 2 ν}{E}{κ}_{ε}-{κ}_{P}\right) {ΔP}_{int} \\ - \frac{2 {κ}_{ε} \left(1-ν\right)}{πE \left({r}_{0 , ext}^{2}-{r}_{0 , int}^{2}\right)} δF\end{matrix}\right)$

Les variables étant ici identiques à celles des équations 1 et 2 explicitées dans le cadre du premier exemple.

Dans un troisième exemple, les premier et deuxième capteurs fibrés 21, 22, selon une variante du premier mode de réalisation, peuvent être, pour le premier, fixé à la surface interne 10B de la paroi 10, pour le deuxième, fixé à la surface externe 10A de la paroi 10. Selon ce troisième exemple, l'inventeur a identifié que les variations de pression externe ΔPₑₓₜ et de température ΔT de la paroi, ici une température de contact, peuvent être déterminées à partir des équations suivantes : [Math 5] $\begin{matrix}{ΔP}_{ext} = \frac{E \left({Δψ}_{2}-{Δψ}_{1}\right) \left({r}_{0 , ext}^{2}-{r}_{0 , int}^{2}\right)}{{κ}_{ε} \left(1+ν\right) \left({r}_{0 , ext}^{2}{cos}^{2}\left({ϕ}_{1}\right)-{r}_{0 , int}^{2}{cos}^{2}\left({ϕ}_{2}\right)\right) + {κ}_{P} E \left({r}_{0 , ext}^{2}-{r}_{0 , int}^{2}\right)} \\ - \frac{1}{π} \frac{{κ}_{ε} \left(1+ν\right) \left({cos}^{2}\left({ϕ}_{1}\right)-{cos}^{2}\left({ϕ}_{2}\right)\right)}{{κ}_{ε} \left(1+ν\right) \left({r}_{0 , ext}^{2}{cos}^{2}\left({ϕ}_{1}\right)-{r}_{0 , int}^{2}{cos}^{2}\left({ϕ}_{2}\right)\right) + {κ}_{P} E \left({r}_{0 , ext}^{2}-{r}_{0 , int}^{2}\right)} δF + {ΔP}_{int}\end{matrix}$ [Math 6] $ΔT = \frac{1}{{κ}_{T}} \left(\begin{matrix}\frac{{κ}_{ε} {r}_{0 , ext}^{2} \left(1-2ν\right) \left({Δψ}_{2}-{Δψ}_{1}\right)}{{κ}_{ε} \left(1+ν\right) \left({r}_{0 , ext}^{2}{cos}^{2}\left({ϕ}_{1}\right)-{r}_{0 , int}^{2}{cos}^{2}\left({ϕ}_{2}\right)\right) + {κ}_{P} E \left({r}_{0 , ext}^{2}-{r}_{0 , int}^{2}\right)} \\ + \frac{{κ}_{ε} \left(1+ν\right) \left({Δψ}_{2}{r}_{0 , ext}^{2}{cos}^{2}\left({ϕ}_{1}\right)-{Δψ}_{1}{r}_{0 , int}^{2}{cos}^{2}\left({ϕ}_{2}\right)\right)}{{κ}_{ε} \left(1+ν\right) \left({r}_{0 , ext}^{2}{cos}^{2}\left({ϕ}_{1}\right)-{r}_{0 , int}^{2}{cos}^{2}\left({ϕ}_{2}\right)\right) + {κ}_{P} E \left({r}_{0 , ext}^{2}-{r}_{0 , int}^{2}\right)} \\ + \frac{{Δψ}_{1} {κ}_{P} E \left({r}_{0 , ext}^{2}-{r}_{0 , int}^{2}\right)}{{κ}_{ε} \left(1+ν\right) \left({r}_{0 , ext}^{2}{cos}^{2}\left({ϕ}_{1}\right)-{r}_{0 , int}^{2}{cos}^{2}\left({ϕ}_{2}\right)\right) + {κ}_{P} E \left({r}_{0 , ext}^{2}-{r}_{0 , int}^{2}\right)} \\ + {κ}_{ε} \frac{{C}_{ie}}{πE \left({r}_{0 , ext}^{2}-{r}_{0 , int}^{2}\right) \left({κ}_{ε}\left(1+ν\right)\left({r}_{0 , ext}^{2}{cos}^{2}\left({ϕ}_{1}\right)-{r}_{0 , int}^{2}{cos}^{2}\left({ϕ}_{2}\right)\right)+{κ}_{P}E\left({r}_{0 , ext}^{2}-{r}_{0 , int}^{2}\right)\right)} δF \\ + \left(\frac{1 - 2 ν}{E}{κ}_{ε}-{κ}_{P}\right) {ΔP}_{int}\end{matrix}\right)$ avec [Math 6a] ${C}_{ie} = \left(1+ν\right) \left(\begin{matrix}\left({r}_{0 , ext}^{2}-{r}_{0 , int}^{2}\right) \left({κ}_{P}E+{κ}_{ε}\left(1+ν\right){cos}^{2}\left({ϕ}_{2}\right)\right) \\ - 2 {κ}_{ε} {r}_{0 , ext}^{2} \left(1+ν\right) {cos}^{2} \left({ϕ}_{1}\right) + {κ}_{ε} \left(1+ν\right) \left({r}_{0 , int}^{2}+{r}_{0 , ext}^{2}\left(1-2ν\right)\right) {cos}^{2} \left({ϕ}_{2}\right) - {κ}_{P} E \left({r}_{0 , ext}^{2}-{r}_{0 , int}^{2}\right)\end{matrix}\right)$

Les variables étant ici identiques à celles des équations 1 et 2 explicitées dans le cadre du premier exemple.

Selon un quatrième exemple, les premier et deuxième capteurs fibrés peuvent être inclus dans la paroi à, respectivement, une distance r₁ et r₂ de l'axe central X-X. [Math 7] $\begin{matrix}{ΔP}_{ext} = \frac{{r}_{1}^{2} {r}_{2}^{2} E \left({ΔΨ}_{1}-{ΔΨ}_{2}\right) \left({r}_{0 , ext}^{2}-{r}_{0 , int}^{2}\right)}{{κ}_{ε} \left(1+ν\right) {r}_{0 , int}^{2} {r}_{0 , ext}^{2} \left({r}_{1}^{2}{cos}^{2}\left({ϕ}_{2}\right)-{r}_{2}^{2}{cos}^{2}\left({ϕ}_{1}\right)\right)} \\ - \frac{{r}_{1}^{2} {r}_{2}^{2} \left({cos}^{2}\left({ϕ}_{2}\right)-{cos}^{2}\left({ϕ}_{1}\right)\right)}{{πr}_{0 , int}^{2} {r}_{0 , ext}^{2} \left({r}_{1}^{2}{cos}^{2}\left({ϕ}_{2}\right)-{r}_{2}^{2}cos\left({ϕ}_{1}\right)\right)} δF + {ΔP}_{int}\end{matrix}$ [Math 8] $ΔT = \frac{1}{{κ}_{T}} \left(\begin{matrix}\frac{{r}_{1}^{2} {r}_{2}^{2} \left({Δψ}_{2}-{Δψ}_{2}\right) \left({κ}_{ε}\left(1-2ν\right)-{κ}_{P}E\right)}{{κ}_{ε} \left(1+ν\right) {r}_{0 , int}^{2} \left({r}_{1}^{2}{cos}^{2}\left({ϕ}_{2}\right)-{r}_{2}^{2}{cos}^{2}\left({ϕ}_{1}\right)\right)} + \frac{{Δψ}_{1} {r}_{1}^{2} {cos}^{2} \left({ϕ}_{2}\right) - {Δψ}_{2} {r}_{2}^{2} {cos}^{2} \left({ϕ}_{1}\right)}{{r}_{1}^{2} {cos}^{2} \left({ϕ}_{2}\right) - {r}_{2}^{2} {cos}^{2} \left({ϕ}_{1}\right)} \\ + \left(\frac{1 - 2 ν}{E}{κ}_{ε}-{κ}_{P}\right) {ΔP}_{int} \\ + \left(\begin{matrix}{κ}_{ε} \frac{\left({r}_{2}^{2}-{r}_{1}^{2}\right) \left({cos}^{2}\left({ϕ}_{1}\right)+{cos}^{2}\left({ϕ}_{2}\right)-2\left(1+ν\right){cos}^{2}\left({ϕ}_{1}\right){cos}^{2}\left({ϕ}_{2}\right)\right) + \left({r}_{1}^{2}+{r}_{2}^{2}\right) \left({cos}^{2}\left({ϕ}_{1}\right)-{cos}^{2}\left({ϕ}_{2}\right)\right)}{2 πE \left({r}_{0 , ext}^{2}-{r}_{0 , int}^{2}\right) \left({r}_{1}^{2}{cos}^{2}\left({ϕ}_{2}\right)-{r}_{2}^{2}{cos}^{2}\left({ϕ}_{1}\right)\right)} \\ - \left(\frac{1 - 2 ν}{E}{κ}_{ε}-{κ}_{P}\right) \frac{{r}_{1}^{2} {r}_{2}^{2} \left({cos}^{2}\left({ϕ}_{2}\right)-{cos}^{2}\left({ϕ}_{1}\right)\right)}{{πr}_{0 , int}^{2} \left({r}_{0 , ext}^{2}-{r}_{0 , int}^{2}\right) \left({r}_{1}^{2}{cos}^{2}\left({ϕ}_{2}\right)-{r}_{2}^{2}{cos}^{2}\left({ϕ}_{1}\right)\right)}\end{matrix}\right) δF\end{matrix}\right)$

On notera, bien entendu, que dans le cas où les premier et deuxième capteurs fibrés peuvent être inclus dans la paroi à une même distance r de l'axe central X-X, l'équation ci-dessus reste bien entendu valable en prenant r₁=r₂=r.

Avec une telle configuration du calculateur 30, le dispositif de mesure 1 selon ce premier mode de réalisation permet la mise en œuvre d'un procédé de mesure d'une variation de pression et/ou de température comprenant les étapes suivantes :
- mesure du premier et du deuxième signal de mesure à partir de l'organe de mesure 20, et éventuellement de l'un ou plusieurs paramètres mesurés qui ont été sélectionnés dans le groupe constitué par une pression hydrostatique initiale, une température initiale s'exerçant dans la cavité 15, une variation d'une pression interne de la cavité 15 et une éventuelle variation d'un effort longitudinal additionnel distinct d'une variation d'un effort longitudinal généré par une variation de pression,
- calcul de la variation de la pression s'appliquant sur la paroi et/ou la variation de la température au niveau de la paroi 10 uniquement à partir du premier signal de mesure, du deuxième signal de mesure et, de manière optionnelle, de l'un ou plusieurs paramètres mesurés qui ont été sélectionnés dans le groupe constitué par une pression hydrostatique initiale, une température initiale s'exerçant dans la cavité 15, une variation d'une pression interne de la cavité 15 et une variation d'un effort longitudinal additionnel distinct d'une variation d'un effort longitudinal généré par une variation de pression.

Ainsi, si une pression hydrostatique interne initiale de la cavité étanche est connue, sa pression absolue est obtenue en faisant la somme de la variation de la pression hydrostatique s'appliquant à cette paroi, telle que précédemment décrite, avec la valeur de la pression initiale.

De la même façon, si une température de contact interne initiale de la cavité étanche est connue, sa température absolue est obtenue en faisant la somme de la variation de la température de contact s'appliquant à cette paroi, telle que précédemment décrite, avec la valeur de la température de contact initiale.

Les figures 2A à 2C illustrent, en section radiale, des exemples de formes de paroi 10 particulièrement avantageuses dans le cadre d'un deuxième mode de réalisation dans lequel les phénomènes de biréfringence peuvent être exploités afin d'obtenir les premier et le deuxième signaux de mesure représentatifs d'une variation de la première déformation et de la deuxième déformation au moyen d'un seul capteur fibré 21.

Un dispositif de mesure 1 selon ce deuxième mode de réalisation se différencie d'un dispositif de mesure 1 selon le premier mode de réalisation en ce que l'organe de mesure comporte uniquement le premier capteur fibré 21, et en ce que la fibre optique 23, dans laquelle est aménagé le premier capteur fibré 21, est adaptée pour favoriser les phénomènes de biréfringence.

Ainsi selon ce deuxième mode de réalisation, l'organe de mesure 20 ne comporte que le premier capteur fibré 21 agencé en une première zone de mesure 11, le deuxième capteur fibré n'étant donc pas nécessaire. Afin de favoriser les phénomènes de biréfringence, la fibre optique 23 dans laquelle est aménagée le réseau de Bragg du premier capteur fibré 21 peut être radialement entourée par une gaine présentant un module d'élasticité supérieur ou égal à une fraction prédéterminée d'un module d'élasticité de la paroi 10, voire être supérieure ou égale audit module d'élasticité de la paroi 10, la fibre optique 23 étant alors fixée dans l'épaisseur de la paroi 1 par ladite gaine. Ladite fraction prédéterminée peut être supérieure ou égale à quatre cinquièmes, voire supérieure ou égale à neuf dixièmes, ou encore supérieure ou égale à dix-neuf vingtièmes. Le coefficient de Poisson de la gaine mécanique peut préférentiellement être égal au coefficient de Poisson de la paroi 10. Bien entendu, cette gaine, qui peut être dite « mécanique », puisque son objet est de permettre une transmission optimale des déformations au cœur optique et n'a pas d'objet de fonction de confinement optique, peut être confondue ou distincte de la gaine optique de la fibre optique 23.

On notera qu'une telle « gaine mécanique » n'est qu'une possibilité de l'invention et que le capteur fibré peut, sans que l'on sorte du cadre de l'invention, ne pas comporter une telle « gaine mécanique ».

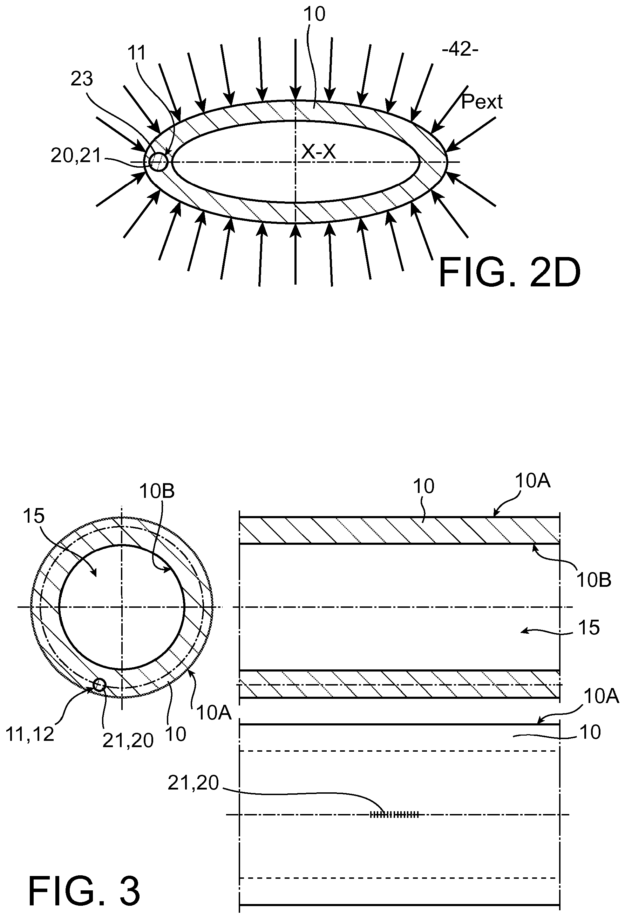

Selon ce deuxième mode de réalisation et comme illustré sur la figure 2D, afin de favoriser les phénomènes de biréfringence et avoir une sensibilité accrue, il peut être avantageux de positionner le premier capteur fibré 21 dans une zone de mesure 11 présentant une coordonnée angulaire pour laquelle une distance entre la surface externe 10A de la paroi 10 et l'axe central X-X est maximale. En effet, à une telle position, les contraintes générées dans l'épaisseur de la paroi, et par conséquent les effets de la biréfringence, sont amplifiés par rapport à une paroi dont la section présente une symétrie circulaire parfaite, dans un ratio égal, au premier ordre, au quotient entre la plus grande distance entre la surface externe 10A de la paroi 10 et l'axe central X-X, et la plus faible distance entre la surface externe 10A de la paroi 10 et l'axe central X-X. Ainsi, pour une paroi de section elliptique, le facteur d'amplification des effets de biréfringence, et donc de la sensibilité du capteur à la pression hydrostatique, est au premier ordre égal au ratio entre la longueur de son grand axe et la longueur de son petit axe.

Afin de bénéficier d'une telle possibilité, la paroi 10 peut ainsi présenter une forme parmi :
- un section radiale elliptique, telle qu'illustrée sur la figure 2A,
- une section radiale longiligne définie par deux côtés longitudinaux parallèles l'un à l'autre et reliés l'un à l'autre, à leurs extrémités, par des formes courbes dont la concavité reste préférentiellement orientée vers la cavité 15, par exemple des demi-cercles, telle qu'illustrée sur la figure 2B,
- une section radiale sensiblement rectangulaire avec les angles arrondis afin de limiter la concentration des contraintes au niveau de ces derniers, comme illustré sur la figure 2C.

De la même façon que pour le premier mode de réalisation, dans ce deuxième mode de réalisation, le calculateur 30 peut avantageusement mettre en œuvre une détermination de la grandeur de pression et/ou de température s'exerçant sur la paroi 10 de façon formelle et ainsi permettre une détermination précise de ces grandeurs.

Afin d'exemplifier une telle détermination, il est possible de prendre l'exemple d'un dispositif selon ce deuxième mode de réalisation avec une configuration de la paroi 10 similaire à celle illustrée sur la figure 1. Ainsi, conformément à la figure 1, la paroi 10 est cylindrique de révolution avec r_{0,int} et r_{0,ext} les rayons intérieur et extérieur de la paroi 10. La paroi 10 présente une dimension longitudinale qui est préférentiellement supérieure ou égale à 10 fois le rayon extérieur r_{0,ext}. L'organe de mesure 20 comprend un unique premier capteur fibré 21 inclus dans la paroi à une distance r de l'axe central X-X. Ce premier capteur fibré 21 permet, en raison des phénomènes de biréfringence, de délivrer le premier signal de mesure, indicatif d'une première longueur d'onde d'une lumière réfléchie par le réseau de Bragg et se propageant suivant un axe ordinaire de la fibre optique 23, et le deuxième signal de mesure, indicatif d'une deuxième longueur d'onde d'une lumière réfléchie par le même réseau de Bragg et se propageant suivant un axe extraordinaire du segment de fibre optique.

Selon un tel premier exemple, l'inventeur a identifié que les variations de pression externe ΔPext et de température ΔT peuvent être déterminées à partir des équations suivantes : [Math 9] ${ΔP}_{ext} = {ΔP}_{int} + \frac{{r}^{2} E \left({Δψ}_{2}-{Δψ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{κ}_{ε}-{κ}_{P}E\right) \left(2-{cos}^{2}\left(ϕ\right)\right)} + \frac{{r}^{2} {cos}^{2} \left(ϕ\right)}{{πr}_{0 , int}^{2} {r}_{0 , ext}^{2} \left(2-{cos}^{2}\left(ϕ\right)\right)} δF$ [Math 10] $ΔT = \frac{1}{2 {κ}_{T}} \left(\begin{matrix}{ΔΨ}_{1} + {ΔΨ}_{2} - 2 {κ}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-3{κ}_{ε}-{κ}_{P}E\right)}\left(1+\frac{{κ}_{P} E \left({r}^{2}-{r}_{0 , int}^{2}\right) - 3 {κ}_{ε} {r}_{0 , int}^{2}}{{κ}_{P} {Er}^{2} \left(2-{cos}^{2}\left(ϕ\right)\right)}{cos}^{2}\left(ϕ\right)\right)\right) \\ + \frac{4 {κ}_{ε} {r}_{0 , int}^{2} cos \left(2ϕ\right) - 2 {κ}_{P} E \left({r}^{2}-{r}_{0 , int}^{2}\right) {cos}^{2} \left(ϕ\right)}{{πr}_{0 , int}^{2} E \left({r}_{0 , ext}^{2}-{r}_{0 , int}^{2}\right) \left(2-{cos}^{2}\left(ϕ\right)\right)} δF\end{matrix}\right)$

On notera que dans ce premier exemple de ce deuxième mode de réalisation, ΔΨ1 et ΔΨ2 sont respectivement la variation relative d'une première longueur d'onde de Bragg du réseau de Bragg correspondant au trajet ordinaire et la variation relative d'une deuxième longueur d'onde de Bragg du réseau de Bragg correspondant au trajet extraordinaire.

Selon une première et une deuxième variante de ce deuxième mode de réalisation, l'organe de mesure 20 peut comprendre, en plus du premier capteur fibré 21 inclus dans la paroi, un deuxième capteur fibré 22. Ce deuxième capteur fibré 22 peut être fixé à la surface extérieure 10A de la paroi 10 conformément à la première variante ou fixé à la surface intérieure 10B de la paroi 10 conformément à la deuxième variante.

Dans le cadre de la première et de la deuxième variante de ce deuxième mode de réalisation, le premier signal est fourni par le premier capteur fibré, correspondant au trajet ordinaire ou au trajet extraordinaire de la fibre optique 23, et le deuxième signal est fourni par le deuxième capteur fibré.

En ce qui concerne ces première et deuxième variantes de ce deuxième mode de réalisation, le calculateur 30 peut avantageusement mettre en œuvre une détermination de la grandeur de pression et/ou de température s'exerçant sur la paroi 10 de façon formelle et ainsi permettre une détermination précise de ces grandeurs.

Dans le cadre de la première variante, et selon la configuration déjà explicitée pour le deuxième mode réalisation, l'inventeur a identifié que les variations de pression externe ΔPₑₓₜ et de température ΔT de la paroi 10, ici une température de contact, peuvent être déterminées à partir des équations suivantes : [Math 11] $ΔP = ΔP + \frac{2 {r}^{2}}{{A}_{e}} \left(\begin{matrix}\left({r}_{0 , ext}^{2}-{r}_{0 , int}^{2}\right) \left(\left({ΔΨ}_{2}-{ΔΨ}_{1}\right)E+{κ}_{ε}\left(1-2ν\right){ΔP}_{int}\right) \\ - \frac{1}{π} \left(1+ν\right) \left({cos}^{2}\left({ϕ}_{1}\right)-{κ}_{ε}{cos}^{2}\left({ϕ}_{2}\right)\right) δF\end{matrix}\right)$ avec [Math 12] $\begin{matrix}{A}_{e} = {r}_{0 , int}^{2} \left(2{κ}_{P}E\left({r}_{0 , ext}^{2}-{r}^{2}\right)-\left(1+ν\right)\left({r}_{0 , ext}^{2}\left(3-cos\left(2{ϕ}_{1}\right)\right)+{κ}_{ε}{r}^{2}cos\left(2{ϕ}_{2}\right)\right)\right) \\ + {κ}_{ε} \left(6{r}_{0 , int}^{2}{r}_{0 , ext}^{2}-{r}^{2}\left(2{r}_{0 , ext}^{2}\left(1-2ν\right)+{r}_{0 , int}^{2}\left(1+v\right)\right)\right)\end{matrix}$

Dans un tel cas, la mesure de la variation de pression externe ΔPₑₓₜ est intrinsèquement indépendante des variations des efforts longitudinaux externes additionnels δF dès lors que : cos²(ϕ₁) -κ_{ε} cos²(ϕ₂) =0, équation qui admet un ensemble non vide de solutions dès lors que κε est positif (par exemple, pour une fibre optique en silice, κ_{ε}≃0,78). [Math 13] $ΔP = ΔP + \frac{{r}^{2}}{{B}_{e}} \left(\begin{matrix}2 \left({r}_{0 , ext}^{2}-{r}_{0 , int}^{2}\right) \left(\left({ΔΨ}_{1}-{ΔΨ}_{2}\right)E-{κ}_{ε}\left(1-2ν\right){ΔP}_{int}\right) \\ - \frac{1}{π} \left(1+ν-{κ}_{ε}\left(2-ν\right)-{κ}_{P}E+\left(1+ν-3{κ}_{ε}-{κ}_{P}E\right)cos\left(2{ϕ}_{1}\right)+{κ}_{ε}\left(1+ν\right)cos\left(2{ϕ}_{2}\right)\right) δF\end{matrix}\right)$ avec [Math 14] ${B}_{e} = {r}_{0 , int}^{2} \left(2{κ}_{P}{Er}^{2}+{r}_{0 , ext}^{2}\left({κ}_{P}E-3\left(1+ν\right)\right)+{r}_{0 , ext}^{2}\left(\begin{matrix}1 + ν - 3 {κ}_{ε} - \\ {κ}_{P} E\end{matrix}\right)cos\left(2{ϕ}_{1}\right)+{κ}_{ε}{r}^{2}\left(1+ν\right)cos\left(2{ϕ}_{2}\right)\right) + {κ}_{ε} \left(3{r}_{0 , int}^{2}{r}_{0 , ext}^{2}+{r}^{2}\left(2{r}_{0 , ext}^{2}\left(1-2ν\right)+{r}_{0 , int}^{2}\left(1+ν\right)\right)\right)$

Dans un tel cas, la mesure de la variation de pression externe ΔPₑₓₜ est intrinsèquement indépendante des variations des efforts longitudinaux externes δF dès lors que : 1+v-κ_{ε}(2-v)-κ_{P}E+(1+v-3κ_{ε}-κ_{P}E) cos(2ϕ₁) +κ_{ε}(1+v) cos(2ϕ₂) =0, équation qui admet un ensemble non vide de solutions.

L'équation 11 correspond au cas où le premier signal est fourni par le premier capteur fibré 21, correspondant au trajet ordinaire, et l'équation 13 correspond au cas où le premier signal est fourni par le premier capteur fibré 21, correspondant au trajet extraordinaire. [Math 15] $ΔT = \frac{1}{{C}_{e}} \left(\left(\begin{matrix}{ΔP}_{int} {r}_{0 , int}^{2} \left(\begin{matrix}{r}_{0 , ext}^{2} \left(3\left({κ}_{ε}\left(\left(1-ν\right)-2{κ}_{ε}\left(1-2ν\right)\right)-{κ}_{P}E\left(1+ν\right)\right)+4{κ}_{ε}{κ}_{P}E\left(1+ν\right)\right) - \\ {κ}_{ε} \left(\begin{matrix}{κ}_{P} {Er}^{2} \left(1+ν\right) \\ + 6 {r}_{0 , ext}^{2} {ν}^{2}\end{matrix}\right) + 2 {κ}_{P}^{2} {E}^{2} \left({r}_{0 , ext}^{2}-{r}^{2}\right) + {ΔΨ}_{1} {r}^{2} E \left({κ}_{ε}\left(2{r}_{0 , ext}^{2}\left(1-2ν\right)+{r}_{0 , int}^{2}\left(1+ν\right)\right)-2{κ}_{P}E\left({r}_{0 , ext}^{2}-{r}_{0 , int}^{2}\right)\right) \\ + {ΔΨ}_{2} {r}_{0 , ext}^{2} E \left(3{r}_{0 , int}^{2}\left(1+ν-2{κ}_{ε}\right)+2{κ}_{P}E\left({r}^{2}-{r}_{0 , int}^{2}\right)\right) + {r}_{0 , int}^{2} {r}_{0 , ext}^{2} \left(1+ν\right) \left({ΔP}_{int}\left(\begin{matrix}{κ}_{P} E - \\ {κ}_{ε} \left(1-2ν\right)\end{matrix}\right)-{ΔΨ}_{2}E\right) cos \left(2{ϕ}_{1}\right) + {κ}_{ε} \left({ΔΨ}_{1}-{ΔP}_{int}{κ}_{P}\right) {r}^{2} {r}_{0 , int}^{2} E \left(1+ν\right) cos \left(2{ϕ}_{2}\right)\end{matrix}\right) \\ + \frac{δF}{2 π \left({r}_{0 , ext}^{2}-{r}_{0 , int}^{2}\right)} \left({κ}_{ε}\left({r}^{2}\left(2{r}_{0 , ext}^{2}\left(1-2ν\right)\left(1+ν-2{κ}_{ε}\right)-{r}_{0 , int}^{2}\left(\begin{matrix}4 {κ}_{P} E \\ + 2 {κ}_{ε} \left(1+ν\right) - {\left(1+ν\right)}^{2}\end{matrix}\right)\right)-3{r}_{0 , int}^{2}{r}_{0 , ext}^{2}\left(1-{ν}^{2}-2{κ}_{ε}\left(1-ν\right)\right)\right)+2{κ}_{P}E\left({r}_{0 , ext}^{2}\left({κ}_{ε}\left(\begin{matrix}{r}^{2} \left(1+ν\right) \\ + {r}_{0 , int}^{2} \left(1-ν\right)\end{matrix}\right)-{r}^{2}\left(1+ν\right)\right)+{r}^{2}{r}_{0 , int}^{2}\left(1+ν\right)\right)+{κ}_{ε}\left(\begin{matrix}{r}^{2} \left(2{κ}_{P}{Er}_{0 , ext}^{2}+{r}_{0 , int}^{2}\left(1+ν-2{κ}_{ε}\right)\right) \\ + {r}_{0 , int}^{2} {r}_{0 , ext}^{2} \left(3\left(1+ν\right)-2\left(3{κ}_{ε}+{κ}_{P}E\right)\right)\end{matrix}\right)\left(1+ν\right)cos\left(2{ϕ}_{2}\right)-\left(1+ν\right)cos\left(2{ϕ}_{1}\right)\left(\begin{matrix}2 {κ}_{P} {Er}^{2} \left({r}_{0 , ext}^{2}-{r}_{0 , int}^{2}\right) - \\ {κ}_{ε} \left({r}^{2}\left({r}_{0 , int}^{2}\left(1+ν\right)+2{r}_{0 , ext}^{2}\left(1-2ν\right)\right)+{r}_{0 , int}^{2}\left(\left(1-ν\right){r}_{0 , ext}^{2}+\left({r}^{2}-{r}_{0 , ext}^{2}\right)\left(1+v\right)cos\left(2{ϕ}_{2}\right)\right)\right)\end{matrix}\right)\right)\end{matrix}\right)\right)$ avec [Math 16] ${C}_{e} = {κ}_{T} E \left(\begin{matrix}2 {κ}_{ε} {r}_{0 , ext}^{2} \left({r}^{2}\left(1-2ν\right)-{3 r}_{0 , int}^{2}\right) - 2 {κ}_{P} {Er}_{0 , int}^{2} \left({r}_{0 , ext}^{2}-{r}^{2}\right) \\ + {r}_{0 , int}^{2} \left(1+ν\right) \left({r}_{0 , ext}^{2}\left(3-cos\left(2{ϕ}_{1}\right)\right)+{κ}_{ε}{r}^{2}\left(1+cos\left(2{ϕ}_{2}\right)\right)\right)\end{matrix}\right)$ [Math 17] $ΔT = \frac{1}{{D}_{e}} \left(\left(\begin{matrix}{ΔP}_{int} {r}_{0 , int}^{2} \left(3{r}_{0 , ext}^{2}\left({κ}_{P}E\left(1+ν\right)-{κ}_{ε}\left(1-ν-2{ν}^{2}-{κ}_{ε}\left(1-2ν\right)\right)\right)-{κ}_{P}E\left(\begin{matrix}\left(1+ν\right) {κ}_{ε} \left({r}^{2}+{2 r}_{0 , ext}^{2}\right) \\ + {κ}_{P} E \left(2{r}^{2}+{r}_{0 , ext}^{2}\right)\end{matrix}\right)\right) + {Δψ}_{1} {r}^{2} E \left({κ}_{ε}\left(2{r}_{0 , ext}^{2}\left(1-2ν\right)+{r}_{0 , int}^{2}\left(1+ν\right)\right)-2{κ}_{P}E\left({r}_{0 , ext}^{2}-{r}_{0 , int}^{2}\right)\right) \\ + {Δψ}_{2} {r}_{0 , ext}^{2} E \left({κ}_{P}E\left(2{r}^{2}+{r}_{0 , int}^{2}\right)-3{r}_{0 , int}^{2}\left(1+ν-{κ}_{ε}\right)\right) \\ + {r}_{0 , int}^{2} {r}_{0 , ext}^{2} \left(1+ν-3{κ}_{ε}-{κ}_{P}E\right) \left({ΔP}_{int}{κ}_{ε}\left(1-2ν\right)+E\left({Δψ}_{2}-{ΔP}_{int}{κ}_{P}\right)\right) cos \left(2{ϕ}_{1}\right) \\ + {κ}_{ε} \left({Δψ}_{1}-{ΔP}_{int}{κ}_{P}\right) {r}^{2} {r}_{0 , int}^{2} E \left(1+ν\right) cos \left(2{ϕ}_{2}\right)\end{matrix}\right)-\frac{δF}{2 π \left({r}_{0 , ext}^{2}-{r}_{0 , int}^{2}\right)}\left(\begin{matrix}{κ}_{ε}^{2} \left(3{r}_{0 , int}^{2}{r}_{0 , ext}^{2}\left(1-ν\right)-{r}^{2}\left({r}_{0 , int}^{2}\left(1+ν\right)+2{r}_{0 , ext}^{2}\left(1-2ν\right)\right)\right) \\ - 2 {κ}_{P} {Er}^{2} \left({r}_{0 , ext}^{2}-{r}_{0 , int}^{2}\right) \left(1+ν-{κ}_{P}E\right) + {κ}_{ε} \left(\begin{matrix}{r}^{2} \left(\begin{matrix}2 {r}_{0 , ext}^{2} \left(1-2ν+{κ}_{P}E\right) \left(1+ν\right) \\ + {r}_{0 , int}^{2} \left({\left(1+ν\right)}^{2}-{κ}_{P}E\left(3+ν\right)\right)\end{matrix}\right) - {r}_{0 , int}^{2} {r}_{0 , ext}^{2} \left(1-ν\right) \left(3\left(1+ν\right)-{κ}_{P}E\right) \\ - \left({r}^{2}\left(2{κ}_{P}{Er}_{0 , ext}^{2}-{r}_{0 , int}^{2}\left(1+ν-{κ}_{ε}-{κ}_{P}E\right)\right)-{r}_{0 , int}^{2}{r}_{0 , ext}^{2}\left(3\left(1+ν\right)-3{κ}_{ε}-{κ}_{P}E\right)\right) \left(1+ν\right) cos \left(2{ϕ}_{2}\right)\end{matrix}\right) \\ - \left(1+ν-3{κ}_{ε}-{κ}_{P}E\right) cos \left(2{ϕ}_{1}\right) \left(2{κ}_{P}{Er}^{2}\left({r}_{0 , ext}^{2}-{r}_{0 , int}^{2}\right)-{κ}_{ε}\left({r}_{0 , int}^{2}\left(\begin{matrix}{r}_{0 , ext}^{2} \left(1-ν\right) \\ + \left({r}^{2}-{r}_{0 , ext}^{2}\right) \left(1+ν\right) cos \left(2{ϕ}_{2}\right)\end{matrix}\right)+{r}^{2}\left({r}_{0 , int}^{2}\left(1+ν\right)+2{r}_{0 , ext}^{2}\left(1-2ν\right)\right)\right)\right)\end{matrix}\right)\right)$ avec [Math 18] ${D}_{e} = {κ}_{T} E \left({κ}_{ε}{r}^{2}\left(2{r}_{0 , ext}^{2}\left(1-2ν\right)+{r}_{0 , int}^{2}\left(1+ν\right)\right)+{r}_{0 , int}^{2}\left(\begin{matrix}{κ}_{P} E \left(2{r}^{2}+{r}_{0 , ext}^{2}\right) \\ + {r}_{0 , ext}^{2} \left(\left(1+ν-3{κ}_{ε}-{κ}_{P}E\right)cos\left(2{ϕ}_{1}\right)-3\left(1+ν-{κ}_{ε}\right)\right) + {κ}_{ε} {r}^{2} \left(1+ν\right) cos \left(2{ϕ}_{2}\right)\end{matrix}\right)\right)$

L'équation 15 concerne le cas où le premier signal fourni par le premier capteur fibré 21 correspond au trajet ordinaire, et l'équation 17 concerne le cas où le premier signal fourni par le premier capteur fibré 21 correspond au trajet extraordinaire.

Dans le cadre de la deuxième variante, et selon la configuration déjà explicitée pour le deuxième mode réalisation, l'inventeur a identifié que les variations de pression ΔPₑₓₜ et de température de contact ΔT peuvent être déterminées à partir des équations suivantes : [Math 19] ${ΔP}_{ext} = {ΔP}_{int} + \frac{2 {r}^{2}}{{A}_{i}} \left(\begin{matrix}\left({r}_{0 , ext}^{2}-{r}_{0 , int}^{2}\right) \left(\left({ΔΨ}_{2}-{ΔΨ}_{1}\right)E+{κ}_{ε}\left(1-2ν\right){ΔP}_{int}\right) \\ - \frac{1}{π} \left(1+ν\right) \left({cos}^{2}\left({ϕ}_{1}\right)-{κ}_{ε}{cos}^{2}\left({ϕ}_{2}\right)\right) δF\end{matrix}\right)$ avec [Math 20] ${A}_{i} = {r}_{0 , ext}^{2} \left(3{κ}_{ε}\left(2{r}_{0 , int}^{2}-{r}^{2}\left(1-ν\right)\right)-2{κ}_{P}E\left({r}^{2}-{r}_{0 , int}^{2}\right)-\left(1+ν\right)\left({r}_{0 , int}^{2}\left(3-cos\left(2{ϕ}_{1}\right)\right)+{κ}_{ε}{r}^{2}cos\left(2{ϕ}_{2}\right)\right)\right)$ [Math 21] $ΔP = {ΔP}_{int} + \frac{{r}^{2}}{{B}_{{i}^{⌣}}} \left(\begin{matrix}2 \left({r}_{0 , ext}^{2}-{r}_{0 , int}^{2}\right) \left(\left({ΔΨ}_{1}-{ΔΨ}_{2}\right)E-{κ}_{ε}\left(1-2ν\right){ΔP}_{int}\right) \\ - \frac{1}{π} \left(1+ν-{κ}_{ε}\left(2-ν\right)-{κ}_{P}E+\left(1+ν-3{κ}_{ε}-{κ}_{P}E\right)cos\left(2{ϕ}_{1}\right)+{κ}_{ε}\left(1+ν\right)cos\left(2{ϕ}_{2}\right)\right) δF\end{matrix}\right)$ avec [Math 22] $\begin{matrix}{B}_{i} = {r}_{0 , ext}^{2} \left(3{κ}_{ε}\right. \left({r}^{2}\left(1-ν\right)+{r}_{0 , int}^{2}\right) + {κ}_{p} E \left(2{r}^{2}+{r}_{0 , int}^{2}\right) \\ + {r}_{0 , int}^{2} \left(\left(1+ν-3{κ}_{ε}-{κ}_{p}E\right)\left.cos\left(2{ϕ}_{1}\right)-3\left(1+ν\right)\right)+{κ}_{ε}{r}^{2}\left(1+ν\right)cos\left(2{ϕ}_{2}\right)\right)\end{matrix}$

Dans un tel cas, la mesure de la variation de pression externe ΔPₑₓₜ est intrinsèquement indépendante des variations des efforts longitudinaux externes δF dès lors que : 1+v-κ_{ε}(2-v)-κ_{P}E+(1+v-3κ_{ε}-κ_{P}E) cos(2ϕ₁) +κ_{ε}(1+v) cos(2ϕ₂) =0, équation qui admet un ensemble non vide de solutions.

L'équation 19 concerne le cas où le premier signal fourni par le premier capteur fibré 21 correspond au trajet ordinaire, et l'équation 21 concerne le cas où le premier signal fourni par le premier capteur fibré 21 correspond au trajet extraordinaire. [Math 23] $ΔT = \frac{1}{{C}_{i}} \left(\begin{matrix}{ΔP}_{int} \left(\begin{matrix}{κ}_{ε} \left({r}_{0 , int}^{2}\left(3\left(1-2{κ}_{ε}\left(1-2ν\right)-ν\left(1+2ν\right)\right)+4{κ}_{P}E\left(1+ν\right)\right)-{κ}_{P}{Er}^{2}\left(1+ν\right)\right) \\ - {κ}_{P} E \left(3{r}_{0 , int}^{2}\left(1+ν\right)+2{κ}_{P}E\left({r}^{2}-{r}_{0 , int}^{2}\right)\right)\end{matrix}\right) + 3 {ΔΨ}_{1} {κ}_{e} {r}^{2} E \left(1-ν\right) \\ + {ΔΨ}_{2} E \left(3{r}_{0 , int}^{2}\left(1+ν-2{κ}_{ε}\right)+2{κ}_{P}E\left({r}^{2}-{r}_{0 , int}^{2}\right)\right) \\ + \left(1+ν\right) \left(\begin{matrix}{r}_{0 , int}^{2} \left({ΔP}_{int}\left({κ}_{P}E-{κ}_{ε}\left(1-2ν\right)\right)-{ΔΨ}_{2}E\right) cos \left(2{ϕ}_{1}\right) \\ + {κ}_{ε} \left({ΔΨ}_{1}-{ΔP}_{int}{κ}_{P}\right) {r}^{2} E cos \left(2{ϕ}_{2}\right)\end{matrix}\right) \\ - \frac{δF}{2 π \left({r}_{0 , ext}^{2}-{r}_{0 , int}^{2}\right)} {κ}_{e} \left(\begin{matrix}\left({r}^{2}-{r}_{0 , int}^{2}\right) \left(1-ν\right) \left(2\left(3{κ}_{ε}+{κ}_{P}E\right)-3\left(1+ν\right)\right) - \left(1+ν\right) \left({r}^{2}\left(\begin{matrix}1 + ν \\ + 2 \left({κ}_{P}E-{κ}_{ε}\right)\end{matrix}\right)+{r}_{0 , int}^{2}\left(3\left(1+ν\right)-2\left(3{κ}_{ε}+{κ}_{P}E\right)\right)\right) cos \left(2{ϕ}_{2}\right) \\ - \left(1+ν\right) cos \left(2{ϕ}_{1}\right) \left(\left(3{r}^{2}+{r}_{0 , int}^{2}\right)\left(1-ν\right)+\left({r}^{2}-{r}_{0 , int}^{2}\right)\left(1+ν\right)cos\left(2{ϕ}_{2}\right)\right)\end{matrix}\right)\end{matrix}\right)$ avec [Math 24] ${C}_{i} = {κ}_{T} E \left(3{κ}_{ε}\left({r}^{2}\left(1-ν\right)-2{r}_{0 , int}^{2}\right)+2{κ}_{P}E\left({r}^{2}-{r}_{0 , int}^{2}\right)+\left(1+ν\right)\left({r}_{0 , int}^{2}\left(3-cos\left(2{ϕ}_{1}\right)\right)+{κ}_{ε}{r}^{2}cos\left(2{ϕ}_{2}\right)\right)\right)$ [Math 25] $ΔT = \frac{1}{{D}_{i}} \left(\begin{matrix}{ΔP}_{int} \left(3{r}_{0 , int}^{2}\left({κ}_{P}E\left(1+ν\right)-{κ}_{ε}\left(1-2ν\right)\left(1+ν-{κ}_{ε}\right)\right)-{κ}_{P}E\left({κ}_{P}E\left(2{r}^{2}+{r}_{0 , int}^{2}\right)+{κ}_{ε}\left(\begin{matrix}{r}^{2} \\ + 2 {r}_{0 , int}^{2}\end{matrix}\right)\left(1+ν\right)\right)\right) + {ΔΨ}_{2} E \left({r}_{0 , int}^{2}\left({κ}_{P}E-3\left(1+ν-{κ}_{ε}\right)\right)+2{κ}_{P}{Er}^{2}\right) + 3 {ΔΨ}_{1} {κ}_{ε} {r}^{2} E \left(1-ν\right) \\ - {r}_{0 , int}^{2} \left(1+ν-3{κ}_{ε}-{κ}_{P}E\right) \left({ΔP}_{int}\left({κ}_{P}E-{κ}_{ε}\left(1-2ν\right)\right)-{ΔΨ}_{2}E\right) cos \left(2{ϕ}_{1}\right) \\ + {κ}_{ε} \left({ΔΨ}_{1}-{ΔP}_{int}{κ}_{P}\right) {r}^{2} E \left(1+ν\right) cos \left(2{ϕ}_{2}\right) \\ + \frac{δF}{2 π \left({r}_{0 , ext}^{2}-{r}_{0 , int}^{2}\right)} {κ}_{ε} \left(\begin{matrix}\left({r}^{2}-{r}_{0 , int}^{2}\right) \left(1-ν\right) \left(3{κ}_{ε}+{κ}_{P}E-3\left(1+ν\right)\right) \\ - \left({r}_{0 , int}^{2}\left(3\left(1+ν-{κ}_{ε}\right)-{κ}_{P}E\right)+{r}^{2}\left(1+ν-{κ}_{ε}-3{κ}_{P}E\right)\right) \left(1+ν\right) cos \left(2{ϕ}_{2}\right) \\ - \left(1+ν-3{κ}_{ε}-{κ}_{P}E\right) cos \left(2{ϕ}_{1}\right) \left(\left(3{r}^{2}+{r}_{0 , int}^{2}\right)\left(1-ν\right)+\left({r}^{2}-{r}_{0 , int}^{2}\right)\left(1+ν\right)cos\left(2{ϕ}_{2}\right)\right)\end{matrix}\right)\end{matrix}\right)$ avec [Math 26] $\begin{matrix}{D}_{i} = {κ}_{⊤} E \left(3{κ}_{ε}\right. \left({r}^{2}\left(1-ν\right)+{r}_{0 , int}^{2}\right) + {κ}_{p} E \left(2{r}^{2}+{r}_{0 , int}^{2}\right) \\ + {r}_{0 , int}^{2} \left(\left(1+ν-3{κ}_{ε}-{κ}_{p}E\right)\left.cos\left(2{ϕ}_{1}\right)-3\left(1+ν\right)\right)+{κ}_{ε}{r}^{2}\left(1+ν\right)cos\left(2{ϕ}_{2}\right)\right)\end{matrix}$

L'équation 23 concerne le cas où le premier signal fourni par le premier capteur fibré 21 correspond au trajet ordinaire, et l'équation 25 concerne le cas où le premier signal fourni par le premier capteur fibré 21, correspond au trajet extraordinaire.

La figure 3 illustre un dispositif de mesure 1 selon un troisième mode de réalisation dans lequel la paroi 10 forme un guide optique, l'organe de mesure 20 comprenant un premier capteur comportant un réseau de Bragg directement inscrit dans la paroi 10 et dans lequel le guide optique est conformé pour présenter des phénomènes de biréfringence. La biréfringence est systématique dès lors que l'organe de mesure i) est logé dans l'épaisseur même de la paroi 10, *ii)* est réalisé dans le même matériau que celle-ci (par exemple en silice, ou en alumine sous forme cristalline), et *iii)* ne présente aucune transition de ses propriétés thermomécaniques (module d'Young E, coefficient de Poisson v et coefficient d'expansion thermique) avec la paroi.

Aussi, la présence d'une gaine mécanique autour du capteur, plus souple (i.e. : dont le module d'Young est significativement plus faible) que la paroi et au contact de celle-ci, permet d'atténuer les effets de biréfringence et les rendre ainsi négligeables.

Un dispositif de mesure 1 selon ce troisième mode de réalisation se différencie d'un dispositif de mesure selon le deuxième mode réalisation en ce que la paroi 10 forme un guide optique creux et en ce que le premier capteur 21 est un capteur directement inscrit dans la paroi 10.

Bien entendu, si dans la figure 3, la paroi 10 présente une forme cylindrique de révolution, une telle forme n'est donnée qu'à titre d'exemple et peut être autre sans que l'on sorte du cadre de l'invention.

Selon un exemple d'application de ce troisième mode de réalisation, la paroi 10 peut former une fibre optique creuse (c'est-à-dire : une fibre optique micro-structurée). Bien entendu, cet exemple n'est pas limitatif et ne présente qu'un exemple de dimensionnement de la paroi 10, la paroi 10 pouvant présenter, pour certaines applications, des dimensions relativement importantes avec une épaisseur relativement faible vis-à-vis desdites dimensions afin de fournir une sensibilité accrue.

On notera que la paroi 10 et le premier capteur 21 selon ce troisième mode réalisation sont, outre la forme du premier capteur, soumis au même type de déformation que la paroi 10 et le premier capteur 21 selon le deuxième mode de réalisation. Ainsi, dans ce troisième mode de réalisation, le calculateur 30 peut avantageusement mettre en œuvre une détermination de la grandeur de pression et/ou de température s'exerçant sur la paroi 10 de façon formelle et ainsi permettre une détermination précise de ces grandeurs.

De ce fait, pour ce troisième mode de réalisation, il est possible de se reporter à l'exemple fourni pour le deuxième mode de réalisation, et aux équations 9 et 10 qui y sont associées.

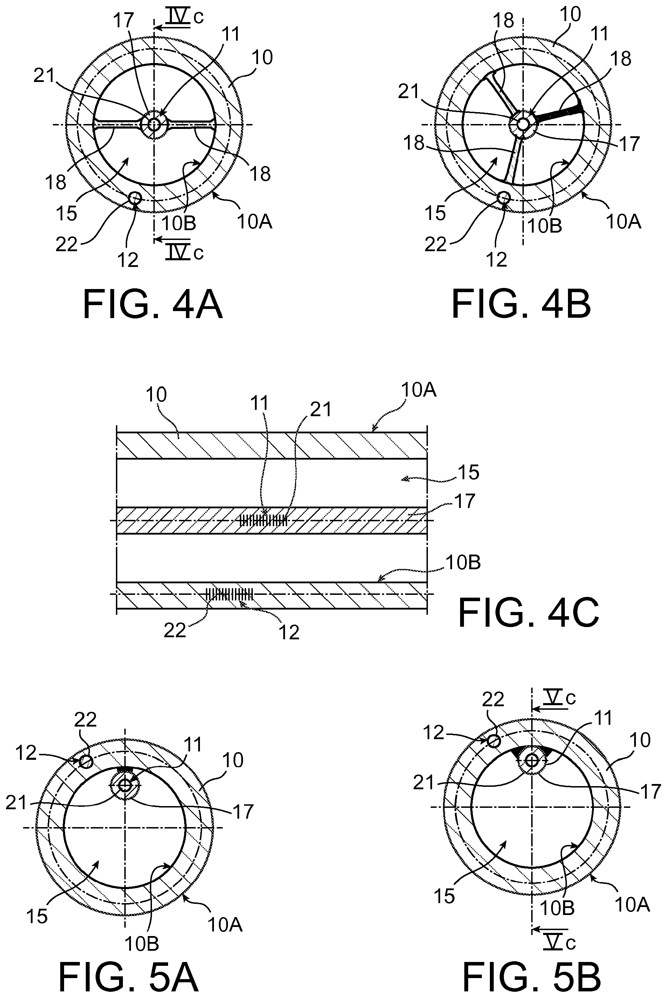

Les figures 4A à 4C illustrent un dispositif de mesure 10 selon, pour la figure 4A, un quatrième mode de réalisation de l'invention, et, pour la figure 4B, selon une variante de ce quatrième mode de réalisation de l'invention, dans lesquels le dispositif comprend en outre un guide optique secondaire 17 central qui s'étend selon l'axe central X-X, et qui est fixé à la paroi au moyen de bras de support 18, le guide optique secondaire comprenant un deuxième capteur 22 de l'organe de mesure 20 qui y est inscrit.

On notera que la vue en coupe sur la figure 4C concerne le quatrième mode de réalisation illustré sur la figure 4B. Bien entendu, en prenant en compte la différence de configuration des bras de support 18 entre le quatrième mode de réalisation et sa variante, il est aisé d'appliquer l'enseignement fourni par la figure 4C au cas de la variante du quatrième mode de réalisation illustré sur la figure 4B.

Les bras de support 18 ont pour rôle de permettre au guide central 17 d'avoir, par continuité, la même variation de déformation longitudinale (c'est-à-dire : selon l'axe X-X) que la paroi 10, sans pour autant créer de biréfringence.

Un dispositif de mesure 10 selon ce quatrième mode de réalisation se différencie d'un dispositif de mesure 10 selon le troisième mode de réalisation en ce que le dispositif comprend le guide optique secondaire 17 central fixé à la paroi 10 au moyen des bras de support 18, et en ce que l'organe de mesure 20 comprend un deuxième capteur comprenant un réseau de Bragg inscrit dans le guide optique secondaire 17.

Selon ce quatrième mode de réalisation, le dispositif de mesure comprend deux bras de support 18 qui s'étendent de part et d'autre du guide optique secondaire 17.

Selon le quatrième mode de réalisation et comme montré sur la figure 4C, d'une manière identique au troisième mode de réalisation, le premier capteur 21 comprend un réseau de Bragg inscrit dans la paroi 10. De même, selon la fixation et la transmission des déformations de la paroi au guide optique secondaire 17, celui-ci est soumis aux mêmes variations de déformations longitudinales que la paroi et permet donc une mesure de cette variation de déformation. Ainsi, le réseau de Bragg inscrit dans la paroi 10 forme un premier capteur 21 fournissant le premier signal de mesure tandis que le réseau de Bragg inscrit dans le guide optique secondaire 17 forme le deuxième capteur 22 fournissant le deuxième signal de mesure.

De la même façon que dans les premier aux troisième modes de réalisation, dans ce quatrième mode de réalisation, le calculateur 30 peut être configuré pour mettre en œuvre une détermination de la grandeur de pression et/ou de température s'exerçant sur la paroi 10 de façon formelle et ainsi permettre une détermination précise de ces grandeurs, tel que mentionné par les équations 19 (dans le cas où, pour le premier capteur 21, c'est le trajet ordinaire qui est exploité) et 21 (dans le cas où pour le premier capteur 21, c'est le trajet extraordinaire qui est exploité) concernant la variation de pression externe ΔPₑₓₜ, et les équations 23 (dans le cas où, pour le premier capteur 21, c'est le trajet ordinaire qui est exploité) et 25 (dans le cas où, pour du premier capteur 21, c'est le trajet extraordinaire qui est exploité) concernant la variation de température ΔT. Selon la variante à ce quatrième mode de réalisation qui est illustré sur la figure 4B, le dispositif de mesure 10 peut comprendre un nombre de bras de support 18 différent de deux, le dispositif de mesure 10 en présentant trois sur la figure 4B. Selon cette variante du quatrième mode de réalisation, les bras de support 18 sont répartis angulairement régulièrement autour du guide d'onde secondaire 17 central, en formant un angle de 2π/3 entre deux bras de support 18 successifs. Bien entendu, il est également envisageable de prévoir un nombre de bras de support 18 supérieur à 3, assurant ainsi une meilleure transduction des déformations longitudinales de la paroi 10 au guide d'onde secondaire 17, sans que l'on sorte du cadre de l'invention.

Les figures 5A à 5C illustrent un dispositif de mesure 10 selon, pour la figure 5A, un cinquième mode de réalisation de l'invention, et pour la figure 5B, selon une variante de ce cinquième mode de réalisation de l'invention, dans lesquels le dispositif comprend en outre un guide optique secondaire 17 adjacent à la surface interne 10B de la paroi 10 et étant fixé à cette dernière, qui s'étend le long de l'axe central X-X et qui comprend un deuxième capteur 22 de l'organe de mesure 20 qui y est inscrit.

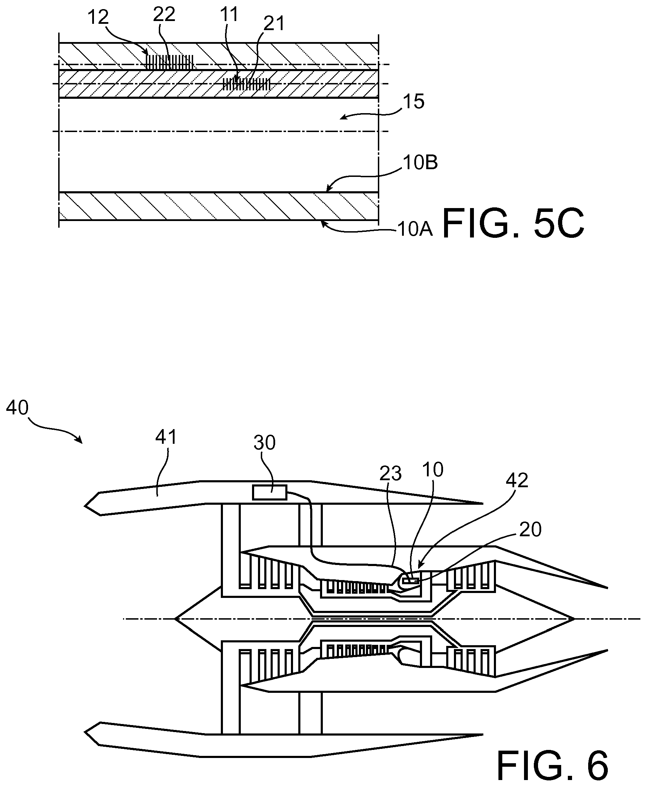

On notera que la vue en coupe Vc-Vc sur la figure 5C concerne la variante 5B, bien entendu, en prenant en compte la différence de fixation du guide optique secondaire 17, il est aisé d'appliquer l'enseignement fourni par la figure 5C au cas du cinquième mode de réalisation illustré sur la figure 5A.

Un dispositif de mesure 10 selon ce cinquième mode de réalisation se différencie d'un dispositif de mesure selon le quatrième mode de réalisation en ce que le guide optique secondaire 17 est directement fixé à la surface interne 10B de la paroi 10, et en ce qu'il n'est pas prévu de bras de support 18.

Selon ce cinquième mode de réalisation, comme illustré sur la figure 5A, le guide optique secondaire 17 est fixé à la surface interne 10B de la paroi 10 selon un segment longitudinal, le guide optique présentant de ce fait, selon une section latérale, un seul segment de fixation. De ce fait la déformation longitudinale (selon l'axe X-X) de la paroi 10 est transmise uniquement par ledit segment longitudinal.

Selon ce cinquième mode de réalisation, la calculateur 30 peut également être configuré pour mettre en œuvre une détermination de la grandeur de pression et/ou de température s'exerçant sur la paroi 10 de façon formelle et ainsi permettre une détermination précise de ces grandeurs, tel que mentionné par les équations 19 (dans le cas où, pour le premier capteur 21, c'est le trajet ordinaire qui est exploité) et 21 (dans le cas où, pour le premier capteur 21, c'est le trajet extraordinaire qui est exploité) concernant la variation de pression externe ΔPₑₓₜ, et les équations 23 (dans le cas où, pour le premier capteur 21, c'est le trajet ordinaire qui est exploité) et 25 (dans le cas où, pour le premier capteur 21, c'est le trajet extraordinaire qui est exploité) concernant la variation de température ΔT.

Selon la variante à au cinquième mode de réalisation qui est illustré sur la figure 5B, le guide optique secondaire 17 peut être fixé à la surface interne 10B de la paroi selon deux segments longitudinaux, le guide optique secondaire 17 présentant de ce fait, selon une section latérale, deux points de fixation. Il en résulte dans cette variante une meilleure transduction des déformations longitudinales (selon X-X) de la paroi 10 au guide optique secondaire 17.

On notera que dans le cadre du cinquième mode de réalisation, et de sa variante de réalisation, il peut être prévu plusieurs guides optiques secondaires 17 agencés dans la paroi 10 sans que l'on sorte du cadre de l'invention. Dans un tel cas, ces guides optiques secondaires 21 sont alors préférentiellement répartis angulairement autour de l'axe X-X de manière régulière.

Quel que soit le mode de réalisation de l'invention, un dispositif de mesure 1 selon l'invention est particulièrement adapté pour permettre la mesure de pression et/ou de température dans des espaces soumis à des températures et des pressions extrêmes telles que celles existant dans une turbomachine 41 comme illustrée sur la figure 6, ou tout autre moteur. Ainsi, lorsqu'un dispositif de mesure 1 équipe une telle turbomachine 41 pour permettre la surveillance d'un espace 42 de ladite turbomachine, tel que la chambre de combustion et les dispositifs voisins soumis, par continuité, à des conditions elles aussi extrêmes, l'ensemble turbomachine 41 et dispositif de mesure 1 forment une installation 40 selon l'invention. De même un tel dispositif de mesure 1 selon l'invention est également parfaitement adapté pour permettre la mesure de pression et/ou de température dans une chaudière sous pression, telle que la cuve d'un réacteur nucléaire.

## Revendications

1. Dispositif de mesure (1) d'une pression et/ou de température, comportant une paroi (10) s'étendant le long d'un axe central (X-X) en l'entourant, la paroi (10) étant fermée à ses extrémités pour délimiter une cavité (15) étanche,
le dispositif de mesure (1) comportant, en outre, au moins un organe de mesure (20) de déformation et un calculateur (30),
chaque organe de mesure (20) étant configuré pour délivrer un premier signal de mesure représentatif d'une variation d'une première déformation en une première zone de mesure (11) de la paroi (10), et un deuxième signal de mesure représentatif d'une variation d'une deuxième déformation, selon une direction distincte de celle de la première déformation, en une deuxième zone (12) de mesure de la paroi (10),
le calculateur (30) étant configuré pour calculer une grandeur de la pression s'appliquant sur la paroi (10) et/ou une grandeur de la température de la paroi (10) uniquement à partir du premier signal de mesure, du deuxième signal de mesure et, de manière optionnelle, d'un ou plusieurs paramètres sélectionnés dans le groupe constitué par une pression hydrostatique initiale, une température initiale s'exerçant dans la cavité (15), une variation d'une pression interne de la cavité (15) et une éventuelle variation d'un effort longitudinal additionnel distinct d'une variation d'un effort longitudinal généré par une variation de pression, les grandeurs de pression et de température étant décorrélées l'une de l'autre, **caractérisé en ce que** la première zone de mesure (11) et la deuxième zone de mesure (12) sont confondues,
chaque organe de mesure (20) comprenant un capteur fibré (21) comportant un segment de fibre optique dans lequel est inscrit un réseau de Bragg, le capteur fibré étant fixé dans la paroi,
le capteur fibré étant configuré pour délivrer le premier signal de mesure, indicatif d'une première longueur d'onde d'une lumière réfléchie par le réseau de Bragg, dite première longueur d'onde de Bragg et se propageant suivant un axe ordinaire du segment de fibre optique, et le deuxième signal de mesure, indicatif d'une deuxième longueur d'onde d'une lumière réfléchie par le réseau de Bragg, dite deuxième longueur d'onde de Bragg, et se propageant suivant un axe extraordinaire du segment de fibre optique,
la paroi (10) présentant une forme de cylindre de révolution à bases circulaires fermées,
les grandeurs de pression et de température étant des variations de pression et de température,
le calculateur étant en outre configuré pour calculer la variation de la pression externe selon : [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{κ}_{ε}-{κ}_{P}E\right) \left(2-{cos}^{2}\left(ϕ\right)\right)} + \frac{{r}^{2} {cos}^{2} \left(ϕ\right)}{{πr}_{0 , int}^{2} {r}_{0 , ext}^{2} \left(2-{cos}^{2}\left(ϕ\right)\right)} δF$
et/ou la variation de la température selon : [Math 10] $ΔT = \frac{1}{2 {κ}_{T}} \left(\begin{matrix}{ΔΨ}_{1} + {ΔΨ}_{2} - 2 {κ}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-3{κ}_{ε}-{κ}_{P}E\right)}\left(1+\frac{{κ}_{P} E \left({r}^{2}-{r}_{0 , int}^{2}\right) - 3 {κ}_{ε} {r}_{0 , int}^{2}}{{κ}_{P} {Er}^{2} \left(2-{cos}^{2}\left(ϕ\right)\right)}{cos}^{2}\left(ϕ\right)\right)\right) \\ + \frac{4 {κ}_{ε} {r}_{0 , int}^{2} cos \left(2ϕ\right) - 2 {κ}_{P} E \left({r}^{2}-{r}_{0 , int}^{2}\right) {cos}^{2} \left(ϕ\right)}{{πr}_{0 , int}^{2} E \left({r}_{0 , ext}^{2}-{r}_{0 , int}^{2}\right) \left(2-{cos}^{2}\left(ϕ\right)\right)} {δF}_{¯}\end{matrix}\right)$
où ΔPₑₓₜ est la variation de la pression externe ;
ΔT est la variation de la température de la paroi (10) ;
ΔΨ1 et ΔΨ2 sont respectivement la variation relative de la première longueur d'onde de Bragg du réseau de Bragg et la variation relative de la deuxième longueur d'onde de Bragg du réseau de Bragg, le réseau de Bragg présentant une double résonnance fondamentale en raison de la biréfringence ;
r_{0,ext} est un rayon externe de la paroi ;
r_{0,int} est un rayon interne de la paroi ;
r est une distance du segment de fibre optique par rapport à l'axe central ;
E et v sont respectivement le module d'Young et le coefficient de Poisson du matériau dans lequel est réalisée la paroi ;
ϕ est un angle de mesure défini entre une direction de mesure du capteur fibré et un plan normal à l'axe central (X-X) ;
κ_{ε} est une sensibilité mécanique des capteurs, égale à un coefficient de proportionnalité entre une variation relative de la grandeur de suivi correspondante et une variation de déformation mécanique ;
κ_{P} est une sensibilité en pression du capteur fibré, égale à un coefficient de proportionnalité entre une variation relative de l'une de la première longueur d'onde de Bragg et la deuxième longueur d'onde de Bragg, et une variation de pression appliquée au capteur fibré, le réseau de Bragg présentant une double résonnance fondamentale en raison de la biréfringence ;
κ_{T} est une sensibilité en température du capteur fibré, égale à un coefficient de proportionnalité entre une variation relative de l'une de la première longueur d'onde de Bragg et la deuxième longueur d'onde de Bragg, et une variation de température appliquée au capteur fibré ; et
δF est la variation d'un effort longitudinal exercé selon l'axe central (X-X) sur la paroi (10), distinct d'une variation d'un effort longitudinal exercé par la variation de pression interne ou la variation de pression externe.

2. Dispositif de mesure (1) selon la revendication 1, dans lequel la cavité (15) présente un vide au moins primaire.

3. Dispositif de mesure (1) selon la revendication 1 ou 2 dans lequel au moins le premier capteur (21) est un capteur fibré comprenant un guide optique dans lequel est gravé un réseau de Bragg, le premier capteur fibré étant fixé dans une épaisseur de la paroi (10), la première direction de mesure étant définie par une direction de propagation du guide optique,
le guide optique étant en contact avec la paroi (10), ou étant radialement entouré par une gaine présentant un module d'élasticité supérieur ou égal à une fraction prédéterminée d'un module d'élasticité de la paroi (10), voire supérieur à ce même module d'élasticité de la paroi (10), le guide d'onde étant alors fixé dans l'épaisseur de la paroi (10) par ladite gaine.

4. Dispositif de mesure (1) selon la revendication 1 ou 2, dans lequel la paroi (10) est un guide optique cylindrique creux fermé à ses extrémités,
chaque organe de mesure (20) comprenant un réseau de Bragg inscrit dans un segment du guide optique creux,
chaque organe de mesure (20) étant configuré pour délivrer le premier signal de mesure, indicatif d'une première longueur d'onde d'une lumière réfléchie par le réseau de Bragg, et se propageant suivant l'un parmi un axe ordinaire et un axe extraordinaire du segment de guide optique creux.

5. Dispositif de mesure (21) selon la revendication 4, dans lequel chaque organe de mesure (20) comprend, en outre, un guide optique secondaire agencé dans la cavité (15) du guide optique creux en étant fixé à ce dernier, et s'étendant parallèlement à l'axe central (X-X),
chaque organe de mesure (20) étant également configuré pour délivrer le deuxième signal de mesure, indicatif d'une deuxième longueur d'onde d'une lumière réfléchie par le réseau de Bragg du guide optique secondaire.

6. Dispositif de mesure (1) selon la revendication 4, dans lequel chaque organe est en outre configuré pour délivrer le deuxième signal de mesure, indicatif d'une deuxième longueur d'onde d'une lumière réfléchie par le réseau de Bragg, et se propageant suivant l'autre parmi un axe ordinaire et un axe extraordinaire du segment de guide optique creux.

7. Installation (40) comprenant :
- un élément (41) présentant un espace (42) dont la pression et/ou la température sont à surveiller,
- un dispositif de mesure (1) selon l'une quelconque des revendications 1 à 6, la paroi (10) aux extrémités fermées étant logée dans l'espace de manière à permettre une mesure d'une grandeur de pression et/ou de température s'exerçant dans l'espace.

8. Installation (40) selon la revendication 7, dans laquelle l'élément (41) est sélectionné parmi un moteur, tel qu'une turbomachine, et une chaudière sous pression, telle que la cuve d'un réacteur nucléaire.

9. Procédé de mesure d'une variation de pression et/ou de température au moyen d'une paroi (10) s'étendant le long d'un axe central en l'entourant, la paroi (10) étant fermée à ses extrémités pour délimiter une cavité (15) étanche, et d'un organe de mesure (20) configuré pour délivrer un premier signal de mesure représentatif d'une variation d'une première déformation en une première zone de mesure (11) de la paroi (10), et un deuxième signal de mesure représentatif d'une variation d'une deuxième déformation, selon une direction distincte de celle de la première déformation, en une deuxième zone de mesure (12) de la paroi (10),
le procédé comprenant les étapes suivantes :
- mesure du premier et du deuxième signal de mesure à partir de l'organe de mesure (20), et éventuellement un ou plusieurs paramètres sélectionnés dans le groupe constitué d'une pression hydrostatique initiale, d'une température initiale s'exerçant dans la cavité (15), d'une variation d'une pression interne de la cavité (15) et d'une éventuelle variation d'un effort longitudinal additionnel distinct d'une variation d'un effort longitudinal généré par une variation de pression,
- calcul de la variation de la pression s'appliquant sur la paroi et/ou la variation de la température au niveau de la paroi (10) uniquement à partir du premier signal de mesure, du deuxième signal de mesure et éventuellement de l'un ou plusieurs paramètres mesurés qui ont été sélectionnés dans le groupe constitué d'une pression hydrostatique initiale, d'une température initiale s'exerçant dans la cavité (15), une variation d'une pression interne de la cavité (15) et une éventuelle variation d'un effort longitudinal additionnel distinct d'une variation d'un effort longitudinal généré par une variation de pression, les grandeurs de pression et de température étant décorrélées l'une de l'autre, **caractérisé en ce que** la première zone de mesure (11) et la deuxième zone de mesure (12) sont confondues,
chaque organe de mesure (20) comprenant un capteur fibré (21) comportant un segment de fibre optique dans lequel est inscrit un réseau de Bragg, le capteur fibré étant fixé dans la paroi,
le capteur fibré étant configuré pour délivrer le premier signal de mesure, indicatif d'une première longueur d'onde d'une lumière réfléchie par le réseau de Bragg, dite première longueur d'onde de Bragg et se propageant suivant un axe ordinaire du segment de fibre optique, et le deuxième signal de mesure, indicatif d'une deuxième longueur d'onde d'une lumière réfléchie par le réseau de Bragg, dite deuxième longueur d'onde de Bragg, et se propageant suivant un axe extraordinaire du segment de fibre optique,
la paroi (10) présentant une forme de cylindre de révolution à bases circulaires fermées, les grandeurs de pression et de température étant des variations de pression et de température,
- calcul de la variation de la pression externe selon : [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{κ}_{ε}-{κ}_{P}E\right) \left(2-{cos}^{2}\left(ϕ\right)\right)} + \frac{{r}^{2} {cos}^{2} \left(ϕ\right)}{{πr}_{0 , int}^{2} {r}_{0 , ext}^{2} \left(2-{cos}^{2}\left(ϕ\right)\right)} δF$
et/ou la variation de la température selon : [Math 10] $ΔT = \frac{1}{2 {κ}_{T}} \left(\begin{matrix}{ΔΨ}_{1} + {ΔΨ}_{2} - 2 {κ}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-3{κ}_{ε}-{κ}_{P}E\right)}\left(1+\frac{{κ}_{P} E \left({r}^{2}-{r}_{0 , int}^{2}\right) - 3 {κ}_{ε} {r}_{0 , int}^{2}}{{κ}_{P} {Er}^{2} \left(2-{cos}^{2}\left(ϕ\right)\right)}{cos}^{2}\left(ϕ\right)\right)\right) \\ + \frac{4 {κ}_{ε} {r}_{0 , int}^{2} cos \left(2ϕ\right) - 2 {κ}_{P} E \left({r}^{2}-{r}_{0 , int}^{2}\right) {cos}^{2} \left(ϕ\right)}{{πr}_{0 , int}^{2} E \left({r}_{0 , ext}^{2}-{r}_{0 , int}^{2}\right) \left(2-{cos}^{2}\left(ϕ\right)\right)} {δF}_{¯}\end{matrix}\right)$
où ΔPₑₓₜ est la variation de la pression externe ;
ΔT est la variation de la température de la paroi (10) ;
ΔΨ1 et ΔΨ2 sont respectivement la variation relative de la première longueur d'onde de Bragg du réseau de Bragg et la variation relative de la deuxième longueur d'onde de Bragg du réseau de Bragg, le réseau de Bragg présentant une double résonnance fondamentale en raison de la biréfringence ;
r_{0,ext} est un rayon externe de la paroi ;
r_{0,int} est un rayon interne de la paroi ;
r est une distance du segment de fibre optique par rapport à l'axe central ;
E et v sont respectivement le module d'Young et le coefficient de Poisson du matériau dans lequel est réalisée la paroi ;
ϕ est un angle de mesure défini entre une direction de mesure du capteur fibré et un plan normal à l'axe central (X-X) ;
κ_{ε} est une sensibilité mécanique des capteurs, égale à un coefficient de proportionnalité entre une variation relative de la grandeur de suivi correspondante et une variation de déformation mécanique ;
κ_{P} est une sensibilité en pression du capteur fibré, égale à un coefficient de proportionnalité entre une variation relative de l'une de la première longueur d'onde de Bragg et la deuxième longueur d'onde de Bragg, et une variation de pression appliquée au capteur fibré, le réseau de Bragg présentant une double résonnance fondamentale en raison de la biréfringence ;
κ_{T} est une sensibilité en température du capteur fibré, égale à un coefficient de proportionnalité entre une variation relative de l'une de la première longueur d'onde de Bragg et la deuxième longueur d'onde de Bragg, et une variation de température appliquée au capteur fibré ; et
δF est la variation d'un effort longitudinal exercé selon l'axe central (X-X) sur la paroi (10), distinct d'une variation d'un effort longitudinal exercé par la variation de pression interne ou la variation de pression externe.

## Patentansprüche

1. Messvorrichtung (1) für einen Druck und/oder eine Temperatur, die eine Wand (10) umfasst, die sich entlang einer Mittelachse (X-X) erstreckt und diese umgibt, wobei die Wand (10) an ihren Enden geschlossen ist, um einen dichten Hohlraum (15) zu begrenzen,
wobei die Messvorrichtung (1) ferner mindestens ein Verformungsmessorgan (20) und ein Steuergerät (30) umfasst,
wobei jedes Messorgan (20) so eingerichtet ist, dass es ein erstes Messsignal liefert, das für eine Änderung einer ersten Verformung in einem ersten Messbereich (11) der Wand (10) repräsentativ ist, und ein zweites Messsignal, das für eine Änderung einer zweiten Verformung, in einer anderen Richtung als die der ersten Verformung, in einem zweiten Messbereich (12) der Wand (10) repräsentativ ist,
wobei das Steuergerät (30) so eingerichtet ist, dass es eine Größe des auf die Wand (10) wirkenden Drucks und/oder eine Größe der Temperatur der Wand (10) nur aus dem ersten Messsignal, dem zweiten Messsignal und gegebenenfalls aus einem oder mehreren Parametern berechnet, die aus der Gruppe ausgewählt sind, die aus einem anfänglichen hydrostatischen Druck, einer anfänglichen Temperatur, die in dem Hohlraum (15) wirkt, einer Änderung eines Innendrucks des Hohlraums (15) und einer möglichen Änderung einer zusätzlichen Längskraft, die sich von einer Änderung einer Längskraft unterscheidet, die durch eine Druckänderung erzeugt wird, besteht, wobei die Druck- und Temperaturgrößen voneinander dekorreliert sind,
**dadurch gekennzeichnet, dass**
der erste Messbereich (11) und der zweite Messbereich (12) zusammenfallen,
wobei jedes Messorgan (20) einen Fasersensor (21) enthält, der ein Lichtwellenleitersegment umfasst, in dem ein Bragg-Gitter eingeschlossen ist, wobei der Fasersensor in der Wand befestigt ist,
wobei der Fasersensor so eingerichtet ist, dass er das erste Messsignal liefert, das eine erste Wellenlänge eines von dem Bragg-Gitter reflektierten Lichts angibt, die erste Bragg-Wellenlänge genannt wird und sich entlang einer ordentlichen Achse des Lichtwellenleitersegments ausbreitet, und das zweite Messsignal, das eine zweite Wellenlänge eines von dem Bragg-Gitter reflektierten Lichts angibt, die zweite Bragg-Wellenlänge genannt wird und sich entlang einer außerordentlichen Achse des Lichtwellenleitersegments ausbreitet,
wobei die Wand (10) die Form eines Rotationszylinders mit geschlossenen kreisförmigen Grundflächen aufweist,
wobei die Druck- und Temperaturgrößen Druck- und Temperaturänderungen sind,
wobei das Steuergerät ferner so eingerichtet ist, dass es die Änderung des Außendrucks gemäß Folgendem berechnet: [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{K}_{ε}-{K}_{P}E\right) \left(2-{cos}^{2}\left(φ\right)\right)} + \frac{{r}^{2} {cos}^{2} \left(φ\right)}{{πr}_{0 , int}^{2} {r}_{0 , ext}^{2} \left(2-{cos}^{2}\left(φ\right)\right)} δF$
und/oder die Änderung der Temperatur gemäß Folgendem berechnet: [Math 10] $ΔT = \frac{1}{2 {K}_{T}} \left(\begin{matrix}{ΔΨ}_{1} + {ΔΨ}_{2} - 2 {K}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-{3 K}_{ε}-{K}_{P}E\right)}\left(1+\frac{{K}_{P} E \left({r}^{2}-{r}_{0 , int}^{2}\right) - {3 K}_{ε} {r}_{0 , int}^{2}}{{K}_{P} {Er}^{2} \left(2-{cos}^{2}\left(φ\right)\right)}{cos}^{2}\left(φ\right)\right)\right) \\ + \frac{4 {K}_{ε} {r}_{0 , int}^{2} cos \left(2φ\right) - 2 {K}_{P} E \left({r}^{2}-{r}_{0 , int}^{2}\right) {cos}^{2} \left(φ\right)}{{πr}_{0 , int}^{2} E \left({r}_{0 , ext}^{2}-{r}_{0 , int}^{2}\right) \left(2-{cos}^{2}\left(φ\right)\right)} δF\end{matrix}\right)$
wobei ΔPext die Änderung des Außendrucks ist;
ΔT die Änderung der Temperatur der Wand (10) ist;
ΔΨ1 und ΔΨ2 jeweils die relative Änderung der ersten Bragg-Wellenlänge des Bragg-Gitters und die relative Änderung der zweiten Bragg-Wellenlänge des Bragg-Gitters sind, wobei das Bragg-Gitter aufgrund der Doppelbrechung eine fundamentale Doppelresonanz aufweist;
r_{0,ext} ein Außenradius der Wand ist;
r_{0,int} ein Innenradius der Wand ist;
r ein Abstand des Lichtwellenleitersegments im Verhältnis zu der Mittelachse ist;
E und ν jeweils der Young-Modul und der Poisson-Koeffizient des Materials sind, aus dem die Wand hergestellt ist;
φ ein definierter Messwinkel ist, der zwischen einer Messrichtung des Fasersensors und einer zu der Mittelachse (X-X) normale Ebene definiert ist;
κ_{ε} die mechanische Empfindlichkeit der Sensoren ist, die einem Proportionalitätskoeffizienten zwischen einer relativen Änderung der entsprechenden Verfolgungsgröße und einer mechanischen Verformungsänderung entspricht;
κ_{P} die Druckempfindlichkeit des Fasersensors ist, die einem Proportionalitätskoeffizienten zwischen einer relativen Änderung einer der ersten Bragg-Wellenlängen und der zweiten Bragg-Wellenlänge und einer auf den Fasersensor angewendeten Druckänderung entspricht, wobei das Bragg-Gitter aufgrund der Doppelbrechung eine fundamentale Doppelresonanz aufweist;
κ_{T} die Temperaturempfindlichkeit des Fasersensors ist, die einem Proportionalitätskoeffizienten zwischen einer relativen Änderung einer der ersten Bragg-Wellenlänge und der zweiten Bragg-Wellenlänge und einer auf den Fasersensor angewendeten Temperaturänderung entspricht; und
δF die Änderung einer Längskraft, die entlang der Mittelachse (X-X) auf die Wand (10) ausgeübt wird, getrennt von einer Änderung einer Längskraft ist, die durch die Innendruckänderung oder die Außendruckänderung ausgeübt wird.

2. Messvorrichtung (1) nach Anspruch 1, wobei der Hohlraum (15) mindestens ein Primärvakuum aufweist.

3. Messvorrichtung (1) nach Anspruch 1 oder 2, wobei mindestens der erste Sensor (21) ein Fasersensor ist, der einen Lichtwellenleiter enthält, in den ein Bragg-Gitter eingraviert ist, wobei der erste Fasersensor in einer Dicke der Wand (10) befestigt ist, wobei die erste Messrichtung durch eine Ausbreitungsrichtung des Lichtwellenleiters definiert ist,
der Lichtwellenleiter in Kontakt mit der Wand (10) steht oder radial von einer Hülle umgeben ist, die ein Elastizitätsmodul aufweist, das größer oder gleich einem vorbestimmten Bruchteil eines Elastizitätsmoduls der Wand (10) ist oder sogar größer ist als dieser Elastizitätsmodul der Wand (10), wobei der Lichtwellenleiter dann durch die Hülle in der Dicke der Wand (10) befestigt ist.

4. Messvorrichtung (1) nach Anspruch 1 oder 2, wobei die Wand (10) ein zylinderförmiger, hohler Lichtwellenleiter ist, der an seinen Enden geschlossen ist,
wobei jedes Messorgan (20) ein Bragg-Gitter enthält, das in einem Segment des hohlen Lichtwellenleiters eingeschlossen ist,
wobei jedes Messorgan (20) so eingerichtet ist, dass es das erste Messsignal liefert, das eine erste Wellenlänge eines von dem Bragg-Gitter reflektierten Lichts angibt und sich entlang einer von einer ordentlichen Achse und einer außerordentlichen Achse des hohlen Lichtwellenleitersegments ausbreitet.

5. Messvorrichtung (21) nach Anspruch 4, wobei jedes Messorgan (20) ferner einen sekundäre Lichtwellenleiter enthält, der in dem Hohlraum (15) des hohlen Lichtwellenleiters angeordnet ist, indem er daran befestigt ist, und sich parallel zu der Mittelachse (X-X) erstreckt,
wobei jedes Messorgan (20) auch so eingerichtet ist, dass es das zweite Messsignal liefert, das eine zweite Wellenlänge eines von dem Bragg-Gitter des sekundären optischen Lichtwellenleiters reflektierten Lichts angibt.

6. Messvorrichtung (1) nach Anspruch 4, wobei jedes Organ ferner so eingerichtet ist, dass es das zweite Messsignal liefert, das eine zweite Wellenlänge eines von dem Bragg-Gitter reflektierten Lichts angibt und sich entlang der anderen von einer ordentlichen Achse und einer außerordentlichen Achse des Segments des hohlen Lichtwellenleiters ausbreitet.

7. Anlage (40), die Folgendes enthält:
- ein Element (41) mit einem Raum (42), dessen Druck und/oder Temperatur zu überwachen ist,
- eine Messvorrichtung (1) nach einem der Ansprüche 1 bis 6, wobei die an ihren Enden geschlosse Wand (10) im Raum untergebracht ist, dass eine Messung einer im Raum wirkenden Druck- und/oder Temperaturgröße ermöglicht wird.

8. Anlage (40) nach Anspruch 7, wobei das Element (41) aus einem Motor, wie einer Turbomaschine, und einem Druckkessel, wie dem Kessel eines Kernreaktors, ausgewählt ist.

9. Verfahren zur Messung einer Druck- und/oder Temperaturänderung mittels einer Wand (10), die sich entlang einer Mittelachse erstreckt und diese umgibt, wobei die Wand (10) an ihren Enden geschlossen ist, um einen dichten Hohlraum (15) zu begrenzen, und eines Messorgans (20), das so eingerichtet ist, dass es ein erstes Messsignal liefert, das für eine Änderung einer ersten Verformung in einem ersten Messbereich (11) der Wand (10) repräsentativ ist, und ein zweites Messsignal, das für eine Änderung einer zweiten Verformung, in einer anderen Richtung als die der ersten Verformung, in einen zweiten Messbereich (12) der Wand (10) repräsentativ ist,
wobei das Verfahren die folgenden Schritte enthält:
- Messen des ersten und zweiten Messsignals ausgehend von dem Messorgan (20) und gegebenenfalls eines oder mehrerer Parameter, die aus der Gruppe ausgewählt sind, die aus einem anfänglichen hydrostatischen Druck, einer anfänglichen Temperatur, die in dem Hohlraum (15) wirkt, einer Änderung eines Innendrucks des Hohlraums (15) und einer möglichen Änderung einer zusätzlichen Längskraft, die sich von einer Änderung einer Längskraft unterscheidet, die durch eine Druckänderung erzeugt wird, besteht,
- Berechnen der Änderung des auf die Wand wirkenden Drucks und/oder der Änderung der Temperatur an der Wand (10) nur aus dem ersten Messsignal, dem zweiten Messsignal und gegebenenfalls aus einem oder mehreren gemessenen Parametern, die aus der Gruppe ausgewählt wurden, die aus einem anfänglichen hydrostatischen Druck, einer anfänglichen Temperatur, die in dem Hohlraum (15) wirkt, einer Änderung eines Innendrucks des Hohlraums (15) und einer möglichen Änderung einer zusätzlichen Längskraft, die sich von einer Änderung einer Längskraft unterscheidet, die durch eine Druckänderung erzeugt wird, besteht, wobei die Druck- und Temperaturgrößen voneinander dekorreliert sind,
**dadurch gekennzeichnet, dass**
der erste Messbereich (11) und der zweite Messbereich (12) zusammenfallen,
wobei jedes Messorgan (20) einen Fasersensor (21) enthält, der ein Lichtwellenleitersegment umfasst, in dem ein Bragg-Gitter eingeschlossen ist, wobei der Fasersensor in der Wand befestigt ist,
wobei der Fasersensor so eingerichtet ist, dass er das erste Messsignal liefert, das eine erste Wellenlänge eines von dem Bragg-Gitter reflektierten Lichts angibt, die erste Bragg-Wellenlänge genannt wird und sich entlang einer ordentlichen Achse des Lichtwellenleitersegments ausbreitet, und das zweite Messsignal, das eine zweite Wellenlänge eines von dem Bragg-Gitter reflektierten Lichts angibt, die zweite Bragg-Wellenlänge genannt wird und sich entlang einer außerordentlichen Achse des Lichtwellenleitersegments ausbreitet,
wobei die Wand (10) die Form eines Rotationszylinders mit geschlossenen kreisförmigen Grundflächen aufweist,
wobei die Druck- und Temperaturgrößen Druck- und Temperaturänderungen sind,
- Berechnen der Änderung des Außendrucks gemäß: [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{K}_{ε}-{K}_{P}E\right) \left(2-{cos}^{2}\left(φ\right)\right)} + \frac{{r}^{2} {cos}^{2} \left(φ\right)}{{πr}_{0 , int}^{2} {r}_{0 , ext}^{2} \left(2-{cos}^{2}\left(φ\right)\right)} δF$
und/oder die Änderung der Temperatur gemäß Folgendem berechnet: [Math 10] $ΔT = \frac{1}{2 {K}_{T}} \left(\begin{matrix}{ΔΨ}_{1} + {ΔΨ}_{2} - 2 {K}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-{3 K}_{ε}-{K}_{P}E\right)}\left(1+\frac{{K}_{P} E \left({r}^{2}-{r}_{0 , int}^{2}\right) - {3 K}_{ε} {r}_{0 , int}^{2}}{{K}_{P} {Er}^{2} \left(2-{cos}^{2}\left(φ\right)\right)}{cos}^{2}\left(φ\right)\right)\right) \\ + \frac{4 {K}_{ε} {r}_{0 , int}^{2} cos \left(2φ\right) - 2 {K}_{P} E \left({r}^{2}-{r}_{0 , int}^{2}\right) {cos}^{2} \left(φ\right)}{{πr}_{0 , int}^{2} E \left({r}_{0 , ext}^{2}-{r}_{0 , int}^{2}\right) \left(2-{cos}^{2}\left(φ\right)\right)} δF\end{matrix}\right)$
wobei ΔPext die Änderung des Außendrucks ist;
ΔT die Änderung der Temperatur der Wand (10) ist;
ΔΨ1 und ΔΨ2 jeweils die relative Änderung der ersten Bragg-Wellenlänge des Bragg-Gitters und die relative Änderung der zweiten Bragg-Wellenlänge des Bragg-Gitters sind, wobei das Bragg-Gitter aufgrund der Doppelbrechung eine fundamentale Doppelresonanz aufweist;
r_{0,ext} ein Außenradius der Wand ist;
r_{0,int} ein Innenradius der Wand ist;
r ein Abstand des Lichtwellenleitersegments im Verhältnis zu der Mittelachse ist;
E und v jeweils der Young-Modul und der Poisson-Koeffizient des Materials sind, aus dem die Wand hergestellt ist;
ϕ ein definierter Messwinkel ist, der zwischen einer Messrichtung des Fasersensors und einer zu der Mittelachse (X-X) normale Ebene definiert ist;
κ_{ε} die mechanische Empfindlichkeit der Sensoren ist, die einem Proportionalitätskoeffizienten zwischen einer relativen Änderung der entsprechenden Verfolgungsgröße und einer mechanischen Verformungsänderung entspricht;
κ_{P} die Druckempfindlichkeit des Fasersensors ist, die einem Proportionalitätskoeffizienten zwischen einer relativen Änderung einer der ersten Bragg-Wellenlängen und der zweiten Bragg-Wellenlänge und einer auf den Fasersensor angewendeten Druckänderung entspricht, wobei das Bragg-Gitter aufgrund der Doppelbrechung eine fundamentale Doppelresonanz aufweist;
κ_{T} die Temperaturempfindlichkeit des Fasersensors ist, die einem Proportionalitätskoeffizienten zwischen einer relativen Änderung einer der ersten Bragg-Wellenlänge und der zweiten Bragg-Wellenlänge und einer auf den Fasersensor angewendeten Temperaturänderung entspricht; und
δF die Änderung einer Längskraft, die entlang der Mittelachse (X-X) auf die Wand (10) ausgeübt wird, getrennt von einer Änderung einer Längskraft ist, die durch die Innendruckänderung oder die Außendruckänderung ausgeübt wird.

## Claims

1. A pressure and/or temperature measuring device (1), comprising a wall (10) extending along a central axis (X-X) by surrounding it, the wall (10) being closed at its ends to delimit a sealed cavity (15),
the measuring device (1) further comprising at least one deformation measuring member (20) and a calculator (30),
each measuring member (20) being configured to deliver a first measurement signal representative of a variation in a first deformation in a first measurement zone (11) of the wall (10), and a second measurement signal representative of a variation in a second deformation, according to a direction distinct from that of the first deformation, in a second measurement zone (12) of the wall (10),
the calculator (30) being configured to calculate a quantity of the pressure being applied to the wall (10) and/or a quantity of the temperature of the wall (10) only from the first measurement signal, the second measurement signal and, optionally, one or more parameter(s) selected from the group consisting of an initial hydrostatic pressure, an initial temperature being exerted in the cavity (15), a variation in an internal pressure of the cavity (15) and a possible variation in an additional longitudinal force distinct from a variation in a longitudinal force generated by a pressure variation, the pressure and temperature quantities being decorrelated from one another,
**characterized in that**
the first measurement zone (11) and the second measurement zone (12) are coincident,
each measuring member (20) comprising a fiber sensor (21) comprising a fiber optic segment in which a Bragg grating is enclosed, the fiber sensor being fastened in the wall,
the fiber sensor being configured to deliver the first measurement signal, indicative of a first wavelength of light reflected by the Bragg grating, so-called first Bragg wavelength and propagating along an ordinary axis of the optical fiber segment, and the second measurement signal, indicative of a second wavelength of light reflected by the Bragg grating, so-called second Bragg wavelength, and propagating along an extraordinary axis of the optical fiber segment,
the wall (10) having a revolution cylinder shape with closed circular bases,
the pressure and temperature quantities being pressure and temperature variations,
the calculator being further configured to calculate the variation in the external pressure according to: [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{K}_{ε}-{K}_{P}E\right) \left(2-{cos}^{2}\left(φ\right)\right)} + \frac{{r}^{2} {cos}^{2} \left(φ\right)}{{πr}_{0 , int}^{2} {r}_{0 , ext}^{2} \left(2-{cos}^{2}\left(φ\right)\right)} δF$
and/or temperature variation according to: [Math 10] $ΔT = \frac{1}{2 {K}_{T}} \left(\begin{matrix}{ΔΨ}_{1} + {ΔΨ}_{2} - 2 {K}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-{3 K}_{ε}-{K}_{P}E\right)}\left(1+\frac{{K}_{P} E \left({r}^{2}-{r}_{0 , int}^{2}\right) - {3 K}_{ε} {r}_{0 , int}^{2}}{{K}_{P} {Er}^{2} \left(2-{cos}^{2}\left(φ\right)\right)}{cos}^{2}\left(φ\right)\right)\right) \\ + \frac{4 {K}_{ε} {r}_{0 , int}^{2} cos \left(2φ\right) - 2 {K}_{P} E \left({r}^{2}-{r}_{0 , int}^{2}\right) {cos}^{2} \left(φ\right)}{{πr}_{0 , int}^{2} E \left({r}_{0 , ext}^{2}-{r}_{0 , int}^{2}\right) \left(2-{cos}^{2}\left(φ\right)\right)} δF\end{matrix}\right)$
where ΔPext is the variation in external pressure;
ΔT is the variation in the temperature of the wall (10);
ΔΨ1 and ΔΨ2 are respectively the relative variation in the first Bragg wavelength of the Bragg grating and the relative variation in the second Bragg wavelength of the Bragg grating, the Bragg grating having a fundamental double resonance due to the birefringence;
r_{0,ext} is an external radius of the wall;
r_{0,int} is an internal radius of the wall;
r is a distance of the optical fiber segment relative to the central axis;
E and ν are respectively the Young's modulus and the Poisson's ratio of the material in which the wall is made;
ϕ is a measurement angle defined between a measurement direction of the fiber sensor and a plane normal to the central axis (X-X);
κ_{ε} is a mechanical sensitivity of the sensors, equal to a coefficient of proportionality between a relative variation in the corresponding tracking quantity and a variation in mechanical deformation;
κ_{P} is a pressure sensitivity of the fiber sensor, equal to a coefficient of proportionality between a relative variation in one of the first Bragg wavelength and the second Bragg wavelength, and a pressure variation applied to the fiber sensor, the Bragg grating having a fundamental double resonance due to birefringence;
κ_{T} is a temperature sensitivity of the fiber sensor, equal to a coefficient of proportionality between a relative variation in one of the first Bragg wavelength and the second Bragg wavelength, and a temperature variation applied to the fiber sensor; and
δF is the variation in a longitudinal force exerted according to the central axis (X-X) on the wall (10), distinct from a variation in a longitudinal force exerted by the internal pressure variation or the external pressure variation.

2. The measuring device (1) according to claim 1, wherein the cavity (15) has a vacuum that is at least rough.

3. The measuring device (1) according to claim 1 or 2, wherein at least the first sensor (21) is a fiber sensor comprising an optical guide in which a Bragg grating is etched, the first fiber sensor being fastened across a thickness of the wall (10), the first measurement direction being defined by a propagation direction of the optical guide,
the optical guide being in contact with the wall (10), or being radially surrounded by a sheath having a modulus of elasticity greater than or equal to a predetermined fraction of a modulus of elasticity of the wall (10), or even greater than this same modulus of elasticity of the wall (10), the waveguide being then fastened in the thickness of the wall (10) through said sheath.

4. The measuring device (1) according to claim 1 or 2, wherein the wall (10) is a hollow cylindrical optical guide closed at its ends,
each measuring member (20) comprising a Bragg grating enclosed in a segment of the hollow optical guide,
each measuring member (20) being configured to deliver the first measurement signal, indicative of a first wavelength of light reflected by the Bragg grating, and propagating along one of an ordinary axis and an extraordinary axis of the hollow optical guide segment.

5. The measuring device (21) according to claim 4, wherein each measuring member (20) further comprises a secondary optical guide arranged in the cavity (15) of the hollow optical guide by being fastened thereto, and extending parallel to the central axis (X-X),
each measuring member (20) being also configured to deliver the second measurement signal, indicative of a second wavelength of a light reflected by the Bragg grating of the secondary optical guide.

6. The measuring device (1) according to claim 4, wherein each member is further configured to deliver the second measurement signal, indicative of a second wavelength of a light reflected by the Bragg grating, and propagating along the other one among an ordinary axis and an extraordinary axis of the hollow optical guide segment.

7. A facility (40) comprising:
- an element (41) having a space (42) the pressure and/or temperature of which are to be monitored,
- a measuring device (1) according to any one of claims 1 to 6, the wall (10) with closed ends being housed in the space so as to enable a measurement of a pressure and/or temperature quantity exerted in the space.

8. The facility (40) according to claim 7, wherein the element (41) is selected from an engine, such as a turbomachine, and a pressurized boiler, such as the vessel of a nuclear reactor.

9. A method for measuring a variation in pressure and/or temperature by means of a wall (10) extending along a central axis by surrounding it, the wall (10) being closed at its ends to delimit a sealed cavity (15), and a measuring member (20) configured to deliver a first measurement signal representative of a variation in a first deformation in a first measurement zone (11) of the wall (10), and a second measurement signal representative of a variation in a second deformation, according to a direction distinct from that of the first deformation, in a second measurement zone (12) of the wall (10),
the method comprising the following steps of:
- measuring the first and second measurement signals from the measuring member (20), and possibly one or more parameter(s) selected from the group consisting of an initial hydrostatic pressure, an initial temperature being exerted in the cavity (15), a variation in an internal pressure of the cavity (15) and a possible variation in an additional longitudinal force distinct from a variation in a longitudinal force generated by a pressure variation,
- calculating the variation in the pressure being applied to the wall and/or the variation in temperature at the wall (10) only from the first measurement signal, the second measurement signal and possibly one or more measured parameter(s) that have been selected from the group consisting of an initial hydrostatic pressure, an initial temperature being exerted in the cavity (15), a variation in an internal pressure of the cavity (15) and a possible variation in an additional longitudinal force distinct from a variation in a longitudinal force generated by a pressure variation, the pressure and temperature quantities being decorrelated from one another,
**characterized in that**
the first measurement zone (11) and the second measurement zone (12) are coincident,
each measuring member (20) comprising a fiber sensor (21) comprising a fiber optic segment in which a Bragg grating is enclosed, the fiber sensor being fastened in the wall,
the fiber sensor being configured to deliver the first measurement signal, indicative of a first wavelength of light reflected by the Bragg grating, so-called first Bragg wavelength and propagating along an ordinary axis of the optical fiber segment, and the second measurement signal, indicative of a second wavelength of light reflected by the Bragg grating, so-called second Bragg wavelength, and propagating along an extraordinary axis of the optical fiber segment,
the wall (10) having a revolution cylinder shape with closed circular bases,
the pressure and temperature quantities being pressure and temperature variations,
- calculating the variation in the external pressure according to: [Math 9] ${ΔP}_{ext} = {ΔP}_{int} + \frac{{r}^{2} E \left({ΔΨ}_{2}-{ΔΨ}_{1}\right) \left({r}_{0 , ext}^{2}-{r}_{0 , int}^{2}\right)}{{r}_{0 , int}^{2} {r}_{0 , ext}^{2} \left(2\left(1+ν\right)-3{K}_{ε}-{K}_{P}E\right) \left(2-{cos}^{2}\left(φ\right)\right)} + \frac{{r}^{2} {cos}^{2} \left(φ\right)}{{πr}_{0 , int}^{2} {r}_{0 , ext}^{2} \left(2-{cos}^{2}\left(φ\right)\right)} δF$
and/or temperature variation according to: [Math 10] $ΔT = \frac{1}{{2 K}_{T}} \left(\begin{matrix}{ΔΨ}_{1} + {ΔΨ}_{2} - {2 K}_{P} E \left(\frac{{ΔP}_{int}}{E}+\frac{{r}^{2} \left({ΔΨ}_{2}-{ΔΨ}_{1}\right)}{2 {r}_{0 , int}^{2} \left(2\left(1+ν\right)-{3 K}_{ε}-{K}_{P}E\right)}\left(1+\frac{{K}_{P} E \left({r}^{2}-{r}_{0 , int}^{2}\right) - {3 K}_{ε} {r}_{0 , int}^{2}}{{K}_{P} {Er}^{2} \left(2-{cos}^{2}\left(φ\right)\right)}{cos}^{2}\left(φ\right)\right)\right) \\ + \frac{4 {K}_{ε} {r}_{0 , int}^{2} cos \left(2φ\right) - 2 {K}_{P} E \left({r}^{2}-{r}_{0 , int}^{2}\right) {cos}^{2} \left(φ\right)}{{πr}_{0 , int}^{2} E \left({r}_{0 , ext}^{2}-{r}_{0 , int}^{2}\right) \left(2-{cos}^{2}\left(φ\right)\right)} δF\end{matrix}\right)$
where ΔPext is the variation in external pressure;
ΔT is the variation in the temperature of the wall (10);
ΔΨ1 and ΔΨ2 are respectively the relative variation in the first Bragg wavelength of the Bragg grating and the relative variation in the second Bragg wavelength of the Bragg grating, the Bragg grating having a fundamental double resonance due to the birefringence;
r_{0,ext} is an external radius of the wall;
r_{0,int} is an internal radius of the wall;
r is a distance of the optical fiber segment relative to the central axis;
E and v are respectively the Young's modulus and the Poisson's ratio of the material in which the wall is made;
ϕ is a measurement angle defined between a measurement direction of the fiber sensor and a plane normal to the central axis (X-X);
κ_{ε} is a mechanical sensitivity of the sensors, equal to a coefficient of proportionality between a relative variation in the corresponding tracking quantity and a variation in mechanical deformation;
κ_{P} is a pressure sensitivity of the fiber sensor, equal to a coefficient of proportionality between a relative variation in one of the first Bragg wavelength and the second Bragg wavelength, and a pressure variation applied to the fiber sensor, the Bragg grating having a fundamental double resonance due to birefringence;
κ_{T} is a temperature sensitivity of the fiber sensor, equal to a coefficient of proportionality between a relative variation in one of the first Bragg wavelength and the second Bragg wavelength, and a temperature variation applied to the fiber sensor; and
δF is the variation in a longitudinal force exerted according to the central axis (X-X) on the wall (10), distinct from a variation in a longitudinal force exerted by the internal pressure variation or the external pressure variation.
